(19) Europäisches Patentamt
European Patent Office
Office européen des brevets

(11) **EP 4 514 071 A1**

(12) **EUROPEAN PATENT APPLICATION**
published in accordance with Art. 153(4) EPC

(43) Date of publication:
**26.02.2025 Bulletin 2025/09**

(21) Application number: **22941514.6**

(22) Date of filing: **08.12.2022**

(51) International Patent Classification (IPC):
**H05B 47/105** (2020.01)   **B60Q 3/80** (2017.01)
**B60Q 3/70** (2017.01)

(52) Cooperative Patent Classification (CPC):
**B60Q 3/70; B60Q 3/80; H05B 47/105**

(86) International application number:
**PCT/CN2022/137561**

(87) International publication number:
**WO 2023/216579 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.05.2022 CN 202210522139**

(71) Applicant: **Shenzhen Yinwang Intelligent
Technologies Co., Ltd.
Shenzhen, Guangdong 518129 (CN)**

(72) Inventors:
• **LI, Huayu
Shenzhen, Guangdong 518129 (CN)**
• **YANG, Jinghuan
Shenzhen, Guangdong 518129 (CN)**
• **LI, Teng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND APPARATUS FOR CONTROLLING LIGHT DISPLAY DEVICE**

(57) This application provides a method and an apparatus for controlling a light display device. The light display device is disposed in a cockpit of a vehicle. The method includes: obtaining user location information, where the user location information indicates a location of a user around the vehicle or a location of the user in the cockpit of the vehicle; and controlling, based on the user location information, a light display device at a first location to display light and/or a first area of the light display device to display light, where the first location is in the cockpit of the vehicle and corresponds to the location of the user in the cockpit of the vehicle, and the first area corresponds to the location of the user in the cockpit of the vehicle. According to the method for controlling the light display device in this application, driving experience of the user can be improved in terms of light interaction.

600

```
┌─────────────────────────────────────────────────────────────────┐
│ S601: Obtain user location information, where the user location   │
│ information indicates a location of a user around a vehicle or a  │
│ location of the user in a cockpit of the vehicle                  │
└─────────────────────────────────────────────────────────────────┘
                                │
                                ▼
┌─────────────────────────────────────────────────────────────────┐
│ S602: Control, based on the user location information, a light    │
│ display device at a first location to display light and/or a      │
│ first area of the light display device to display light, where    │
│ the first location is disposed in the cockpit of the vehicle and  │
│ corresponds to the location of the user in the cockpit of the     │
│ vehicle, and the first area corresponds to the location of the    │
│ user in the cockpit of the vehicle                                │
└─────────────────────────────────────────────────────────────────┘
```

FIG. 6

**Description**

This application claims priority to Chinese Patent Application No. 202210522139.7, filed with the China National Intellectual Property Administration on May 13, 2022 and entitled "METHOD AND APPARATUS FOR CONTROLLING LIGHT DISPLAY DEVICE", which is incorporated herein by reference in its entirety.

**TECHNICAL FIELD**

This application relates to the field of intelligent vehicles, and more specifically, to a method and an apparatus for controlling a light display device.

**BACKGROUND**

With continuous development of the automobile industry, people have increasingly high requirements on personalization and healthiness of in-vehicle environments. As an important part of automobile design and overall appearance, in-vehicle breathing lights and ambient lights are used by an increasing quantity of automobile manufacturers. The in-vehicle ambient lights can adjust a driver's mode while driving, and personalized in-vehicle ambient lights are increasingly popular among young consumers.

Therefore, a method and an apparatus for controlling a light display device to improve interaction experience of users are urgently to be developed.

**SUMMARY**

This application provides a method and an apparatus for controlling a light display device, to control a light display device of a vehicle to display different light effect in different cases to represent different light signals. This helps improve driving experience of a user in terms of light interaction.

The vehicle (sometimes briefly referred to as a vehicle) in this application is a vehicle in a broad sense, and may be a means of transportation (such as a car, a truck, a motorcycle, an airplane, a train, or a ship), an industrial vehicle (such as a pallet truck, a trailer, or a tractor), an engineering vehicle (such as an excavator, a bulldozer, or a crane), an agricultural device (such as a lawn mower or a harvester), an amusement device, a toy vehicle, or the like. A type of the vehicle is not specifically limited in embodiments of this application.

According to a first aspect, a method for controlling a light display device is provided. The light display device is disposed in a cockpit of a vehicle. The method may be performed by the vehicle, may be performed by an in-vehicle terminal of the vehicle, for example, an in-vehicle infotainment system, or may be performed by a chip or a circuit used for the vehicle. This is not limited in this application. For ease of description, that the method is performed by the vehicle is used as an example for description.

The method may include: obtaining user location information, where the user location information indicates a location of a user around the vehicle or a location of the user in the cockpit of the vehicle; and controlling, based on the user location information, a light display device at a first location to display light and/or a first area of the light display device to display light, where the first location is in the cockpit of the vehicle and corresponds to the location of the user in the cockpit of the vehicle, and the first area corresponds to the location of the user in the cockpit of the vehicle.

In the foregoing technical solution, an area that is of the light display device and that displays light can be determined based on the location of the user. This can improve human-machine interaction and further improve driving experience of the user. In addition, in the foregoing technical solution, a location of the light display device can be further determined based on the location of the user, so that interaction between the light display device and the user is more personalized, and interaction between the light display device and a specific user can be prevented from affecting another user. This further improves driving experience of the user.

For example, a portable terminal of the user, such as a mobile phone, a vehicle key, or an electronic wallet, is detected by using a wireless short-range communication system such as an ultra wide band (ultra wide band, UWB) or Bluetooth low energy (Bluetooth low energy, BLE) of the vehicle, and then the user location information may be determined by using the wireless short-range communication system such as the UWB or the BLE. Alternatively, it is detected by using a radar sensor of the vehicle that the user approaches the vehicle, and the user is determined by using the radar sensor. Alternatively, the user location information may be detected by using a gravity sensor or the like disposed on a seat. Alternatively, the user location information may be determined by using an image captured by an in-cockpit camera of the vehicle.

In some possible implementations, a mapping relationship between the first location and the location of the user is preset.

For example, that the first location corresponds to the location of the user in the cockpit of the vehicle includes that the first location and the location of the user are in a same area in the cockpit of the vehicle. For an example, if both the first location and the location of the user are in a driver's seat area of the vehicle, the first location may be at a dashboard, may be at a driver's door armrest, or may be another location in the driver's seat area. For another example, if both the first location and the location of the user are in a rear right seat area of the vehicle, the first location may be at a rear part of a front passenger seat headrest, may be at a rear right door armrest, or may be another location in the rear right seat area of the vehicle.

In some possible implementations, a mapping relationship between the first area and the location of the user is preset.

For example, a first area corresponding to a user at the driver's seat is an upper left corner area of the light display device, and a first area corresponding to a user at a front passenger seat is an upper right corner area of the light display device. In addition, a first area corresponding to a user at the rear right seat of the vehicle is a lower right corner area of the light display device, and a first area corresponding to a user at a rear left seat of the vehicle is a lower left corner area of the light display device.

It should be noted that the vehicle may have only one light display device, or the vehicle may have a plurality of light display devices that are respectively disposed at different locations in the cockpit of the vehicle. This is not specifically limited in this application.

With reference to the first aspect, in some implementations of the first aspect, the method further includes: within preset duration after the user enters the vehicle, controlling, based on the user location information, the light display device at the first location to display color gradient light and/or the first area of the light display device to display color gradient light, where the color gradient light has a gradient color toward a direction of the location of the user.

In some possible implementations, after the user enters the vehicle, the vehicle obtains the user location information. For example, the preset duration may be 200 milliseconds, may be 400 milliseconds, or may be other duration. This is not specifically limited in this application.

Further, in some possible implementations, when the user location information indicates a location of the user in the cockpit of the vehicle, within first preset duration in which the user is seated at the location, a light display device corresponding to the location is controlled to display color gradient light, and/or an area that is of the light display device and that corresponds to the location is controlled to display color gradient light.

For example, the first preset duration may be 0.5 second, 1 second, or may be other duration. This is not specifically limited in this application.

In some possible implementations, when two or more users respectively enter different locations of the vehicle, light display devices at different locations may be respectively controlled to display light, and/or different areas of the light display devices may be respectively controlled to display light.

In the foregoing technical solution, locations of the users are associated with the locations of the light display devices that display light and/or with the areas that are of the light display devices and that display light, so that when the users enter the vehicle, the users can obtain a timely light response. In this way, the users in different areas each can obtain greeting experience. This helps improve driving experience of the users.

With reference to the first aspect, in some implementations of the first aspect, the method further includes: obtaining user emotion status information; and controlling, based on the user emotion status information and the user location information, a color of the light displayed by the light display device and/or a pattern formed by the light.

For example, the emotion status information may be information generated based on a face image that is of the user and that is obtained by an image shooting apparatus or an in-cockpit vision sensor.

In some possible implementations, light display devices corresponding to locations of users are respectively controlled to display light based on the user emotion status information. For example, a light display device at the front passenger seat interacts with the user at the front passenger seat, and at the same time, a light display device at the rear part of the front passenger seat headrest interacts with the user at the rear right seat.

In the foregoing technical solution, when user emotion statuses at different locations are different, different light effect can be separately displayed to the users at different locations, so that the users do not affect each other, thereby further improving interaction experience.

With reference to the first aspect, in some implementations of the first aspect, the method further includes: when the user emotion status information indicates a sad emotion status, controlling the light display device to display colored light and/or the light display device to display a smiling face pattern; or when the user emotion status information indicates a cheerful or happy emotion status, controlling the light display device to display white light and/or the light display device to display a "W"-shaped pattern.

In the foregoing technical solution, when a user emotion changes, a color jump of light can be implemented, so that more interactive light signals that are easy to understand by the user can be provided, thereby improving interaction experience and driving experience of the user.

With reference to the first aspect, in some implementations of the first aspect, the method further includes: obtaining first audio information, and determining a location of a sound source of the first audio information; and controlling, based on the first audio information and/or the location of the sound source of the first audio information, the light display device to display light.

In some possible implementations, a location of the user in the cockpit of the vehicle may be determined based on the location of the sound source, and then a light display device at the location in the cockpit is controlled to perform light interaction with the user; and/or the location of the user in the cockpit of the vehicle may be determined based on the location of the sound source, and then an area that is of the light display device and that corresponds to the location of the user is controlled to display light.

In some possible implementations, a location of an intelligent device that makes a sound may be determined based on the location of the sound source, and then a light display device at a location corresponding to the location of the intelligent device is controlled to perform light interaction with the user; and/or the location of the intelligent device that makes the sound may be determined based on the location of the sound source, and then an area that is of the light display device and that corresponds to the location of the intelligent device is controlled to display light.

In some possible implementations, a location of the light display device in the cockpit of the vehicle is determined based on content of the first audio information, and then the light display device is controlled to perform light interaction with the user; and/or a light emitting area of the light display device is determined based on the content of the first audio information, and then light beads in the area of the light display device is controlled to display light.

In the foregoing technical solution, the user may interact with the light display device by using a voice. In addition, the user may further interact with the intelligent device in the vehicle by using a voice. In a process of the interaction between the user and the intelligent device, the light display device may display different light effect based on a scene, thereby improving fun of driving the vehicle by the user.

With reference to the first aspect, in some implementations of the first aspect, the first audio information includes a specific wakeup word, and the specific wakeup word is used to wake up an intelligent device in the cockpit of the vehicle, or the first audio information comes from the intelligent device. The method further includes: in response to the first audio information, controlling a light display device at a second location to display light and/or a second area of the light display device to display light, where the second location is disposed in the cockpit of the vehicle and corresponds to a location of the intelligent device in the cockpit of the vehicle, and the second area corresponds to the location of the intelligent device in the cockpit of the vehicle.

In some possible implementations, the first audio information comes from the user at the driver's seat, and the specific wakeup word included in the first audio information may be "turn on the in-vehicle infotainment system". After the voice instruction is received, the in-vehicle infotainment system at the driver's seat is controlled to be turned on. Further, the light display device at the second location is controlled to display light, where the second location may be a location in the driver's seat area, for example, at a dashboard, a driver's door armrest, or the like; and/or the second area of the light display device is controlled to display light, where the second area may be the upper left corner area of the light display device. Alternatively, the first audio information comes from the user at the driver's seat, and the specific wakeup word included in the first audio information may be "turn on the in-vehicle infotainment system at the front passenger seat". After the voice instruction is received, the in-vehicle infotainment system at the front passenger seat is controlled to be turned on. Further, the light display device at the second location is controlled to display light, where the second location may be a location in the front passenger seat area, for example, at a front passenger seat storage compartment, a front passenger door armrest, or the like; and/or the second area of the light display device is controlled to display light, where the second area may be the upper right corner area of the light display device.

For example, the intelligent device includes but is not limited to an in-vehicle infotainment system, an in-vehicle Bluetooth speaker, an in-vehicle robot, and the like.

With reference to the first aspect, in some implementations of the first aspect, the method further includes: obtaining second audio information within preset duration in which the intelligent device is woken up; and controlling the light display device to display light based on duration in which the second audio information lasts.

For example, the second audio information may include the voice exchanged between the user and the intelligent device. In some possible implementations, the controlling the light display device to display light based on duration in which the second audio information lasts may include: A start moment of light display may be a moment at which it is detected that the user inputs voice information within preset duration in which a global in-vehicle infotainment system is woken up, and an end moment of light display is a moment at which the user stops inputting the voice.

The preset duration may be 5 seconds, 30 seconds, or another duration. This is not specifically limited in embodiments of this application.

In the foregoing technical solution, when the user speaks, the light display device is controlled to keep displaying light, and when the user stops speaking, the light display device is controlled to stop displaying light, so that the user can actually feel a response. This helps improve driving experience of the user.

With reference to the first aspect, in some implementations of the first aspect, the color of the light displayed by the light display device is blue.

With reference to the first aspect, in some implementations of the first aspect, the first audio information indicates a voice announcement failure. The method further includes: controlling the light display device to display gray light.

For example, the first audio information may include audio announced by the in-vehicle infotainment system. After the audio announced by the in-vehicle infotainment system is parsed, if content announced by the in-vehicle infotainment system is unclear or difficult to understand, it is considered that the voice announcement fails. For example, when a part of the content announced by the in-vehicle infotainment system is missing due to a poor network status, the first audio information may indicate the voice announcement failure. Further, the light display device is controlled to display the gray light.

With reference to the first aspect, in some implementations of the first aspect, the method further includes: when it is detected that a camera ascends, controlling the light display device to display an upward arrow pattern; or when it is detected that the camera descends, controlling the light display device to display a downward arrow pattern, where the camera is a pop-up camera disposed in the cockpit of the vehicle.

With reference to the first aspect, in some implementations of the first aspect, the light display device includes at least one of an ambient light, a breathing light, an in-vehicle display screen, and a HUD.

With reference to the first aspect, in some implementations of the first aspect, the light display device is disposed at at least one of a dashboard, a central control area display screen, a rear part of a front seat headrest, a front central armrest, and a front passenger seat.

According to a second aspect, a method for controlling a light display device is provided. The light display device is disposed in a cockpit of a vehicle. The method may include: obtaining light effect indication information, where the light effect indication information indicates a working mode of the light display device; and determining a first location of the light display device based on a warning level of the light effect indication information; and controlling the light display device to display light at the first location.

In the foregoing technical solution, when light effect of a high warning level is displayed, the light display device is controlled to be at a high location, so that a driver can be prevented from missing important warning information. This improves interaction between the light display device and the driver, and further improves driving experience and driving safety.

In some possible implementations, the light display device is originally at a low location, and when the light effect of the high warning level is displayed, the light display device rises from the low location to a high location. Alternatively, the light display device is originally at a high location, and when light effect of a low warning level is displayed, the light display device descends from the high location to a low location.

With reference to the second aspect, in some implementations of the second aspect, the method further includes: obtaining running status information of the vehicle, where the running status information indicates that the vehicle is in a driving status or a parking status; determining a first working mode based on the running status information and the light effect indication information; and controlling the light display device to display light in the first working mode at the first location.

In some possible implementations, if the light effect indication information includes one piece of information, the first working mode is determined based on the light effect indication information. For example, if the piece of information is the in-vehicle infotainment system announcement failure information, it is determined that the first working mode is an in-vehicle infotainment system announcement failure mode.

In some possible implementations, if the light effect indication information includes a plurality of pieces of information, a working mode indicated by a piece of information with a highest priority level in the plurality of pieces of information is determined as the first working mode. The priority level may be determined based on the running status information of the vehicle. For example, if the vehicle receives the light effect indication information in the driving status, and the light effect indication information includes lane change reminder information and incoming call reminder information, it is determined, based on the driving status, that a priority of the lane change reminder information is higher than that of the incoming call reminder information, and then it is determined that the first working mode is a lane change reminder mode.

In the foregoing technical solution, light effect associated with assistance information needed for driving is preferentially displayed, so that the driver can be reminded of information needed for driving in time. This helps improve driving safety.

With reference to the second aspect, in some implementations of the second aspect, the light effect indication information includes information that indicates the first working mode and information that indicates a second working mode. The method further includes: when it is determined, based on the running status information, that a priority of the first working mode is higher than a priority of the second working mode, determining the first working mode from the first working mode and the second working mode.

With reference to the second aspect, in some implementations of the second aspect, the method further includes: controlling a light flash frequency and/or light intensity of the light display device based on the warning level of the light effect indication information.

In the foregoing technical solution, different warning levels correspond to different light flash frequencies and/or light intensity, so that the user can more easily distinguish content expressed by different warning light. This helps improve driving experience and driving safety of the user.

With reference to the second aspect, in some implementations of the second aspect, the light effect indication information includes at least one of high fatigue prompt information, moderate fatigue prompt information, mild fatigue prompt information, lane change reminder information, road deviation reminder information, and collision reminder information, where a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information. The method further includes: when the light effect indication information indicates a low warning level, controlling the flash frequency of the light display device to be P1 and/or the light intensity of the light display device to be L1; when the light effect indication information indicates a medium warning level, controlling the flash frequency of the light display device to be P2 and/or the light intensity of the light display device to be L2; or when the light effect indication information indicates a high warning level, controlling the flash frequency of the light display device to be P3 and/or the light intensity of the light display device to be L3, where P1 is less than or equal to P2, P2 is less than or equal to P3, L1 is less than or equal to L2, and L2 is less than or equal to L3.

For example, if maximum light intensity can be displayed by the light display device is 2 candela (candela, cd), L1 may be 30% of the maximum light intensity, that is, 600 micro candela (micro candela, mcd), L2 may be 60% of the maximum light intensity, that is, 1.2 cd, and L3 may be the maximum light intensity 2 cd.

For example, the flash frequency P1 of the light display device may be 1 Hertz (Hertz, Hz) to 10 Hz, P2 may be 10 Hz to 20 Hz, and P3 may be 20 Hz to 40 Hz.

It should be understood that values of L1 to L3 and P1 to P3 are merely examples for description, and L1 to L3 and P1 to P3 may alternatively be other values. This is not specifically limited in this application.

With reference to the second aspect, in some implementations of the second aspect, the method further includes: when the vehicle changes to a left lane or deviates to the left of a road, controlling a plurality of light beads of the light display device to light up sequentially from right to left and/or the light display device to display a left-pointing arrow pattern or a "Z"-shaped pattern; or when the vehicle changes to a right lane or deviates to the right of a road, controlling a plurality of light beads of the light display device to light up sequentially from left to right and/or the light display device to display a right-pointing arrow pattern or an inverse "Z"-shaped pattern.

It should be understood that the plurality of light beads that sequentially light up from left to right and the plurality of light beads that sequentially light up from right to left may be same light beads, or may be different light beads. This is not specifically limited in this application.

In the foregoing technical solution, light displayed as a dynamic effect pattern is more eye-catching, so that the user can notice lane change reminder light effect or road deviation reminder light effect in time, and further become more focused and adjust a driving status in time. This helps improve driving safety.

With reference to the second aspect, in some implementations of the second aspect, a color of the light displayed by the light display device is red.

According to a third aspect, a method for controlling a light display device is provided. The light display device is disposed in a cockpit of a vehicle. The method may include: obtaining user location information, where the user location information indicates a location of a user around the vehicle or a location of the user in the cockpit of the vehicle; and controlling, based on the user location information, a light display device at a first location to display color gradient light and/or a first area of the light display device to display color gradient light, where the first location is in the cockpit of the vehicle and corresponds to the location of the user in the cockpit of the vehicle, and the first area corresponds to the location of the user in the cockpit of the vehicle.

According to a fourth aspect, a method for controlling a light display device is provided. The light display device is disposed in a cockpit of a vehicle. The method may include: obtaining user emotion status information; and controlling, based on the user emotion status information, a color of the light displayed by the light display device and/or a pattern formed by the light.

According to a fifth aspect, a method for controlling a light display device is provided. The light display device is disposed in a cockpit of a vehicle. The method may include: obtaining user emotion status information; and when the user emotion status information indicates a sad emotion status, controlling the light display device to display colored light and/or the light display device to display a smiling face pattern; or when the user emotion status information indicates a cheerful or happy emotion status, controlling the light display device to display white light and/or the light display device to display a "W"-shaped pattern.

According to a sixth aspect, a method for controlling a light display device is provided. The light display device is disposed in a cockpit of a vehicle. The method may include: obtaining first audio information, and determining a location of a sound source of the first audio information; and controlling, based on the first audio information and/or the location of the sound source of the first audio information, the light display device to display light.

According to a seventh aspect, a method for controlling a light display device is provided. The light display device is disposed in a cockpit of a vehicle. The method may include: obtaining first audio information, and determining a location of a sound source of the first audio information, where the first audio information includes a specific wakeup word, and the specific wakeup word is used to wake up an intelligent device in the cockpit of the vehicle, or the first audio information comes from the intelligent device; and in response to the first audio information, controlling a light display device at a second location to display light and/or a second area of the light display device to display light, where the second location is disposed in the cockpit of the vehicle and corresponds to a location of the intelligent device in the cockpit of the vehicle, and the second area corresponds to the location of the intelligent device in the cockpit of the vehicle.

According to an eighth aspect, a method for controlling a light display device is provided. The light display device is disposed in a cockpit of a vehicle. The method may include: obtaining second audio information within preset duration in which the intelligent device is woken up; and controlling the light display device to display light based on duration in which the second audio information lasts.

According to a ninth aspect, a method for controlling a light display device is provided. The light display device is disposed in a cockpit of a vehicle. The method may include: obtaining first audio information; and when the first audio information indicates a voice announcement failure, controlling the light display device to display gray light.

According to a tenth aspect, a method for controlling a light display device is provided. The light display device is disposed in a cockpit of a vehicle. The method may include: obtaining camera ascending and descending information, where the camera ascending and descending information indicates that a pop-up camera is in an ascending status or a descending status, and the pop-up camera is disposed in the cockpit of the vehicle; and when it is determined that the pop-up camera is in the ascending status, controlling the light display device to display an upward arrow pattern; or when it is determined that the pop-up camera is in the descending status, controlling the light display device to display a downward arrow pattern.

According to an eleventh aspect, a method for controlling a light display device is provided. The light display device is disposed in a cockpit of a vehicle. The method may include: obtaining light effect indication information, where the light effect indication information indicates a working mode of the light display device; and controlling a light flash frequency and/or light intensity of the light display device based on a warning level of the light effect indication information.

According to a twelfth aspect, a method for controlling a light display device is provided. The light display device is disposed in a cockpit of a vehicle. The method may include: obtaining light effect indication information, where the light effect indication information indicates a working mode of the light display device, and the light effect indication information includes at least one of high fatigue prompt information, moderate fatigue prompt information, mild fatigue prompt information, lane change reminder information, road deviation reminder information, and collision reminder information, where a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information; and when the light effect indication information indicates a low warning level, controlling the flash frequency of the light display device to be P1 and/or the light intensity of the light display device to be L1; when the light effect indication information indicates a medium warning level, controlling the flash frequency of the light display device to be P2 and/or the light intensity of the light display device to be L2; or when the light effect indication information indicates a high warning level, controlling the flash frequency of the light display device to be P3 and/or the light intensity of the light display device to be L3, where P1 is less than or equal to P2, P2 is less than or equal to P3, L1 is less than or equal to L2, and L2 is less than or equal to L3.

According to a thirteenth aspect, a method for controlling a light display device is provided. The light display device is disposed in a cockpit of a vehicle. The method may include: obtaining road information and/or pose information of the vehicle; determining, based on the road information and/or the pose information of the vehicle, a lane change direction of the vehicle or a road deviation direction of the vehicle; and when the vehicle changes to a left lane or deviates to the left of a road, controlling a plurality of light beads of the light display device to light up sequentially from right to left and/or the light display device to display a left-pointing arrow pattern or a "Z"-shaped pattern; or when the vehicle changes to a right lane or deviates to the right of a road, controlling a plurality of light beads of the light display device to light up sequentially from left to right and/or the light display device to display a right-pointing arrow pattern or an inverse "Z"-shaped pattern.

According to a fourteenth aspect, a method for controlling a light display device is provided. The light display device is disposed in a cockpit of a vehicle. The method may include: obtaining first light effect information and second light effect information, where the first light effect information indicates a color and brightness of a first light bead, and the second light effect information indicates a color and brightness of a second light bead, where the first light bead and the second light bead are two light beads that are located in a same row or a same column of the light display device and that are spaced by at least one third light bead; determining light effect interpolation information based on the first light effect information and the second light effect information, where the light effect interpolation information includes a color and brightness of the at least one third light bead; and controlling, based on the light effect interpolation information, the at least one third light bead to display light.

With reference to the fourteenth aspect, in some implementations of the fourteenth aspect, the first light bead is a light bead in a first working mode, the second light bead is a light bead in a second working mode, and the first working mode and the second working mode are adjacent working modes. An interval between a moment at which the first light bead stops emitting light and a moment at which the second light bead starts emitting light is less than or equal to a preset threshold.

With reference to the fourteenth aspect, in some implementations of the fourteenth aspect, the first light effect information further includes information about the moment at which the first light bead stops emitting light, and the second light effect information further includes information about a moment at which the first light bead starts emitting light. The method further includes: determining a moment at which the at least one third light bead emits light based on the first light effect information and the second light effect information, and the light effect interpolation information includes the moment at which the at least one third light bead emits light.

According to a fifteenth aspect, an apparatus for controlling a light display device is provided. The light display device is disposed in a cockpit of a vehicle. The apparatus includes: an obtaining unit, configured to obtain user location information, where the user location information indicates a location of a user around the vehicle or a location of the user in the cockpit of the vehicle; and a processing unit, configured to control, based on the user location information, a light display device at a first location to display light and/or a first area of the light display device to display light, where the first location is in the cockpit of the vehicle and corresponds to the location of the user in the cockpit of the vehicle, and the first area corresponds to the location of the user in the cockpit of the vehicle.

With reference to the fifteenth aspect, in some implementations of the fifteenth aspect, the processing unit is further configured to:

control, based on the user location information, the light display device at the first location to display color gradient light and/or the first area of the light display device to display color gradient light, where the color gradient light has a gradient color toward a direction of the location of the user.

With reference to the fifteenth aspect, in some implementations of the fifteenth aspect, the obtaining unit is further configured to obtain user emotion status information. The processing unit is further configured to control, based on the user emotion status information and the user location information, a color of the light displayed by the light display device and/or a pattern formed by the light.

With reference to the fifteenth aspect, in some implementations of the fifteenth aspect, the processing unit is further configured to: when the user emotion status information indicates a sad emotion status, control the light display device to display colored light and/or the light display device to display a smiling face pattern; or when the user emotion status information indicates a cheerful or happy emotion status, control the light display device to display white light and/or the light display device to display a "W"-shaped pattern.

With reference to the fifteenth aspect, in some implementations of the fifteenth aspect, the obtaining unit is further configured to obtain first audio information. The processing unit is further configured to: determine a location of a sound source of the first audio information; and control, based on the first audio information and/or the location of the sound source of the first audio information, the light display device to display light.

With reference to the fifteenth aspect, in some implementations of the fifteenth aspect, the first audio information includes a specific wakeup word, and the specific wakeup word is used to wake up an intelligent device in the cockpit of the vehicle, or the first audio information comes from the intelligent device. The processing unit is further configured to: in response to the first audio information, control a light display device at a second location to display light and/or a second area of the light display device to display light, where the second location is disposed in the cockpit of the vehicle and corresponds to a location of the intelligent device in the cockpit of the vehicle, and the second area corresponds to the location of the intelligent device in the cockpit of the vehicle.

With reference to the fifteenth aspect, in some implementations of the fifteenth aspect, the obtaining unit is further configured to obtain second audio information within preset duration in which the intelligent device is woken up. The processing unit is further configured to control the light display device to display light based on duration in which the second audio information lasts.

With reference to the fifteenth aspect, in some implementations of the fifteenth aspect, a color of the light displayed by the light display device is blue.

With reference to the fifteenth aspect, in some implementations of the fifteenth aspect, the first audio information indicates a voice announcement failure, and the processing unit is further configured to control the light display device to display gray light.

With reference to the fifteenth aspect, in some implementations of the fifteenth aspect, the processing unit is further configured to: when it is detected that a camera ascends, control the light display device to display an upward arrow pattern; or when it is detected that the camera descends, control the light display device to display a downward arrow pattern, where the camera is a pop-up camera disposed in the cockpit of the vehicle.

With reference to the fifteenth aspect, in some implementations of the fifteenth aspect, the light display device includes at least one of an ambient light, a breathing light, an in-vehicle display screen, and a HUD.

With reference to the fifteenth aspect, in some implementations of the fifteenth aspect, the light display device is disposed at at least one of a dashboard, a central control area display screen, a rear part of a front seat headrest, a front central armrest, and a front passenger seat.

According to a sixteenth aspect, an apparatus for controlling a light display device is provided. The light display device is disposed in a cockpit of a vehicle. The apparatus includes: an obtaining unit, configured to obtain light effect indication information, where the light effect indication information indicates a working mode of the light display device; and a processing unit, configured to: determine a first location of the light display device based on a warning level of the light effect indication information; and control the light display device to display light at the first location.

With reference to the sixteenth aspect, in some implementations of the sixteenth aspect, the obtaining unit is further configured to: obtain running status information of the vehicle, where the running status information indicates that the vehicle is in a driving status or a parking status. The processing unit is further configured to: determine a first working mode based on the running status information and the light effect indication information; and control the light display device to display light in the first working mode at the first location.

With reference to the sixteenth aspect, in some implementations of the sixteenth aspect, the light effect indication information includes information that indicates the first working mode and information that indicates a second working mode, and the processing unit is further configured to: when it is determined, based on the running status information, that a priority of the first working mode is higher than a priority of the second working mode, determine the first working mode from the first working mode and the second working mode.

With reference to the sixteenth aspect, in some implementations of the sixteenth aspect, the processing unit is further configured to control a light flash frequency and/or light intensity of the light display device based on the warning level of the light effect indication information.

With reference to the sixteenth aspect, in some implementations of the sixteenth aspect, the light effect indication information includes at least one of high fatigue prompt information, moderate fatigue prompt information, mild fatigue prompt information, lane change reminder information, road deviation reminder information, and collision reminder information, where a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information. The processing unit is further configured to: when the light effect indication information indicates a low warning level, control the flash frequency of the light display device to be P1 and/or the light intensity of the light display device to be L1; when the light effect indication information indicates a medium warning level, control the flash frequency of the light display device to be P2 and/or the light intensity of the light display device to be L2; or when the light effect indication information indicates a high warning level, control the flash frequency of the light display device to be P3 and/or the light intensity of the light display device to be L3, where P1 is less than or equal to P2, P2 is less than or equal to P3, L1 is less than or equal to L2, and L2 is less than or equal to L3.

With reference to the sixteenth aspect, in some implementations of the sixteenth aspect, the processing unit is further configured to: when the vehicle changes to a left lane or deviates to the left of a road, control a plurality of light beads of the light display device to light up sequentially from right to left and/or the light display device to display a left-pointing arrow pattern or a "Z"-shaped pattern; or when the vehicle changes to a right lane or deviates to the right of a road, control a plurality of light beads of the light display device to light up sequentially from left to right and/or the light display device to display a right-pointing arrow pattern or an inverse "Z"-shaped pattern.

With reference to the sixteenth aspect, in some implementations of the sixteenth aspect, a color of the light displayed by the light display device is red.

According to a seventeenth aspect, an apparatus for controlling a light display device is provided. The light display device is disposed in a cockpit of a vehicle. The apparatus includes: an obtaining unit, configured to obtain user location information, where the user location information indicates a location of a user around the vehicle or a location of the user in the cockpit of the vehicle; and a processing unit, configured to control, based on the user location information, a light display device at a first location to display color gradient light and/or a first area of the light display device to display color gradient light, where the first location is in the cockpit of the vehicle and corresponds to the location of the user in the cockpit of the vehicle, and the first area corresponds to the location of the user in the cockpit of the vehicle.

According to an eighteenth aspect, an apparatus for controlling a light display device is provided. The light display device is disposed in a cockpit of a vehicle. The apparatus includes: an obtaining unit, configured to obtain user emotion status information; and a processing unit, configured to control, based on the user emotion status information, a color of the light displayed by the light display device and/or a pattern formed by the light.

According to a nineteenth aspect, an apparatus for controlling a light display device is provided. The light display device is disposed in a cockpit of a vehicle. The apparatus includes: an obtaining unit, configured to obtain user emotion status information; and a processing unit, configured to: when the user emotion status information indicates a sad emotion status, control the light display device to display colored light and/or the light display device to display a smiling face pattern; or when the user emotion status information indicates a cheerful or happy emotion status, control the light display device to display white light and/or the light display device to display a "W"-shaped pattern.

According to a twentieth aspect, an apparatus for controlling a light display device is provided. The light display device is disposed in a cockpit of a vehicle. The apparatus includes: an obtaining unit, configured to obtain first audio information; and a processing unit, configured to: determine a location of a sound source of the first audio information; and control, based on the first audio information and/or the location of the sound source of the first audio information, the light display device to display light.

According to a twenty-first aspect, an apparatus for controlling a light display device is provided. The light display device is disposed in a cockpit of a vehicle. The apparatus includes: an obtaining unit, configured to obtain first audio information; and a processing unit, configured to: determine a location of a sound source of the first audio information, where the first audio information includes a specific wakeup word, and the specific wakeup word is used to wake up an intelligent device in the cockpit of the vehicle, or the first audio information comes from the intelligent device; and in response to the first audio information, control a light display device at a second location to display light and/or a second area of the light display device to display light, where the second location is disposed in the cockpit of the vehicle and corresponds to a location of the intelligent device in the cockpit of the vehicle, and the second area corresponds to the location of the intelligent device in the cockpit of the vehicle.

According to a twenty-second aspect, an apparatus for controlling a light display device is provided. The light display device is disposed in a cockpit of a vehicle. The apparatus includes: an obtaining unit, configured to obtain second audio information within preset duration in which the intelligent device is woken up; and a processing unit, configured to control the light display device to display light based on duration in which the second audio information lasts.

According to a twenty-third aspect, an apparatus for controlling a light display device is provided. The light display device is disposed in a cockpit of a vehicle. The apparatus includes: an obtaining unit, configured to obtain first audio information; and a processing unit, configured to: when the first audio information indicates a voice announcement failure, control the light display device to display gray light.

According to a twenty-fourth aspect, an apparatus for controlling a light display device is provided. The light display device is disposed in a cockpit of a vehicle. The apparatus includes: an obtaining unit, configured to obtain camera ascending and descending information, where the camera ascending and descending information indicates that a pop-up camera is in an ascending status or a descending status, and the pop-up camera is disposed in the cockpit of the vehicle; and a processing unit, configured to: when it is determined that the pop-up camera is in the ascending status, control the light display device to display an upward arrow pattern; or when it is determined that the pop-up camera is in the descending status, control the light display device to display a downward arrow pattern.

According to a twenty-fifth aspect, an apparatus for controlling a light display device is provided. The light display device is disposed in a cockpit of a vehicle. The apparatus includes: an obtaining unit, configured to obtain light effect indication information, where the light effect indication information indicates a working mode of the light display device; and a processing unit, configured to: control a light flash frequency and/or light intensity of the light display device based on a warning level of the light effect indication information.

According to a twenty-sixth aspect, an apparatus for controlling a light display device is provided. The light display device is disposed in a cockpit of a vehicle. The apparatus includes: an obtaining unit, configured to obtain light effect indication information, where the light effect indication information indicates a working mode of the light display device, and the light effect indication information includes at least one of high fatigue prompt information, moderate fatigue prompt information, mild fatigue prompt information, lane change reminder information, road deviation reminder information, and collision reminder information, where a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information; and a processing unit, configured to: when the light effect indication information indicates a low warning level, control the flash frequency of the light display device to be P1 and/or the light intensity of the light display device to be L 1; when the light effect indication information indicates a medium warning level, control the flash frequency of the light display device to be P2 and/or the light intensity of the light display device to be L2; or when the light effect indication information indicates a high warning level, control the flash frequency of the light display device to be P3 and/or the light intensity of the light display device to be L3, where P1 is less than or equal to P2, P2 is less than or equal to P3, L1 is less than or equal to L2, and L2 is less than or equal to L3.

According to a twenty-seventh aspect, an apparatus for controlling a light display device is provided. The light display device is disposed in a cockpit of a vehicle. The apparatus includes: an obtaining unit, configured to obtain road information and/or pose information of the vehicle; and a processing unit, configured to: determine, based on the road information and/or the pose information of the vehicle, a lane change direction of the vehicle or a road deviation direction of the vehicle; and when the vehicle changes to a left lane or deviates to the left of a road, control a plurality of light beads of the light display device to light up sequentially from right to left and/or the light display device to display a left-pointing arrow pattern or a "Z"-shaped pattern; or when the vehicle changes to a right lane or deviates to the right of a road, control a plurality of light beads of the light display device to light up sequentially from left to right and/or the light display device to display a right-pointing arrow pattern or an inverse "Z"-shaped pattern.

According to a twenty-eighth aspect, an apparatus for controlling a light display device is provided. The light display device is disposed in a cockpit of a vehicle. The apparatus includes: an obtaining unit, configured to obtain first light effect information and second light effect information, where the first light effect information indicates a color and brightness of a first light bead, and the second light effect information indicates a color and brightness of a second light bead, where the first light bead and the second light bead are two light beads that are located in a same row or a same column of the light display device and that are spaced by at least one third light bead; and a processing unit, configured to: determine light effect interpolation information based on the first light effect information and the second light effect information, where the light effect interpolation information includes a color and brightness of the at least one third light bead; and control, based on the light effect interpolation information, the at least one third light bead to display light.

With reference to the twenty-eighth aspect, in some implementations of the twenty-eighth aspect, the first light bead is a light bead in a first working mode, the second light bead is a light bead in a second working mode, and the first working mode and the second working mode are adjacent working modes. An interval between a moment at which the first light bead stops emitting light and a moment at which the second light bead starts emitting light is less than or equal to a preset threshold.

With reference to the twenty-eighth aspect, in some implementations of the twenty-eighth aspect, the first light effect information further includes information about the moment at which the first light bead stops emitting light, and the second light effect information further includes information about a moment at which the first light bead starts emitting light. The processing unit is further configured to determine a moment at which the at least one third light bead emits light based on the first light effect information and the second light effect information, and the light effect interpolation information includes the moment at which the at least one third light bead emits light.

According to a twenty-ninth aspect, an apparatus for controlling a light display device is provided. The apparatus includes: a memory, configured to store a program; and a processor, configured to execute the program stored in the memory. When the program stored in the memory is executed, the processor is configured to perform the method according to any one of the possible implementations of the first aspect to the fourteenth aspect.

According to a thirtieth aspect, a vehicle is provided. The vehicle includes the apparatus and the light display device in any one of the possible implementations of the fifteenth aspect to the twenty-eighth aspect or the apparatus and the light display device according to any one of the possible implementations of the twenty-ninth aspect. The light display device may include an ambient light, a breathing light, an in-vehicle display screen, and a HUD, and may further include another device that can display light. The light display device is disposed at at least one of a dashboard, a central control area display screen, a rear part of a front seat headrest, a front central armrest, and a front passenger seat, or may be disposed in another location in the vehicle. This is not specifically limited in embodiments of this application.

According to a thirty-first aspect, a computer program product is provided. The computer program product includes computer program code. When the computer program code is run on a computer, the computer is enabled to perform the method according to any one of the possible implementations of the first aspect to the fourteenth aspect.

It should be noted that all or some of the computer program code may be stored in a first storage medium, where the first storage medium may be packaged together with a processor, or may be packaged separately from a processor. This is not specifically limited in embodiments of this application.

According to a thirty-second aspect, a computer-readable medium is provided. The computer-readable medium stores program code. When the computer program code is run on a computer, the computer is enabled to perform the method according to any one of the possible implementations of the first aspect to the fourteenth aspect.

According to a thirty-fourth aspect, a chip is provided. The chip includes a processor, configured to invoke a computer program or computer instructions stored in a memory, to enable the processor to perform the method according to any one of the possible implementations of the first aspect to the fourteenth aspect.

With reference to the thirty-fourth aspect, in a possible implementation, the processor is coupled to the memory through an interface.

With reference to the thirty-fourth aspect, in a possible implementation, the chip system further includes a memory, where the memory stores a computer program or computer instructions.

In embodiments of this application, the light display device can be controlled based on a vehicle running status, a vehicle driving status, a driver status, and the like, so that the light display device displays different light effect in different cases, to represent different light signals. This improves interaction between the light display device and the user, and helps improve driving experience of the user in terms of interaction. The area that is of the light display device and that displays light is determined based on the location of the user. This can improve human-machine interaction and further improve driving experience of the user. A location of the light display device is determined based on the location of the user, so that interaction between the light display device and the user is more personalized, and interaction between the light display device and a specific user can be prevented from affecting another user. This further improves driving experience of the user. The user emotion status can be determined based on facial information of the user, and then corresponding light is fed back to the user based on the user emotion status. This helps relieve a mood of the user in a driving process, and improves driving experience of the user. The user may further interact with the light display device by using a voice. The light display device may display different light effect based on different voice information, thereby improving fun of driving the vehicle by the user. At least one of the location of the light display device and the light flash frequency or the light intensity of the light display device is determined based on the warning level of the light effect indication information, so that the warning light can be more eye-catching, and the driver can be prevented from missing important warning information. This improves interaction between the light display device and the driver, and further improves driving experience and driving safety.

## BRIEF DESCRIPTION OF DRAWINGS

FIG. 1 is a block diagram of a vehicle 100 according to an embodiment of this application;
FIG. 2(a) to FIG. 2(c) are a diagram of an application scenario of a method for controlling a light display device according to an embodiment of this application;
FIG. 3 is a block diagram of a system for controlling a light display device according to an embodiment of this application;
FIG. 4 is a schematic flowchart of a method for controlling a light display device according to an embodiment of this application;
FIG. 5 is another schematic flowchart of a method for controlling a light display device according to an embodiment of this application;
FIG. 6 is still another schematic flowchart of a method for controlling a light display device according to an embodiment of this application;
FIG. 7(a) to FIG. 7(d) are a diagram of a working mode of a light display device according to an embodiment of this application;
FIG. 8 is yet another schematic flowchart of a method for controlling a light display device according to an embodiment of this application;
FIG. 9(a) to FIG. 9(c) are a diagram of another working mode of a light display device according to an embodiment of this application;
FIG. 10 is still yet another schematic flowchart of a method for controlling a light display device according to an embodiment of this application;
FIG. 11(a) to FIG. 11(c) are a diagram of still another working mode of a light display device according to an embodiment of this application;
FIG. 12 is a further schematic flowchart of a method for controlling a light display device according to an embodiment of this application;
FIG. 13(a) and FIG. 13(b) are a diagram of yet another working mode of a light display device according to an embodiment of this application;
FIG. 14 is a block diagram of an apparatus for controlling a light display device according to an embodiment of this application; and
FIG. 15 is a block diagram of another apparatus for controlling a light display device according to an embodiment of this application.

## DESCRIPTION OF EMBODIMENTS

The following describes technical solutions in embodiments of this application with reference to accompanying drawings.

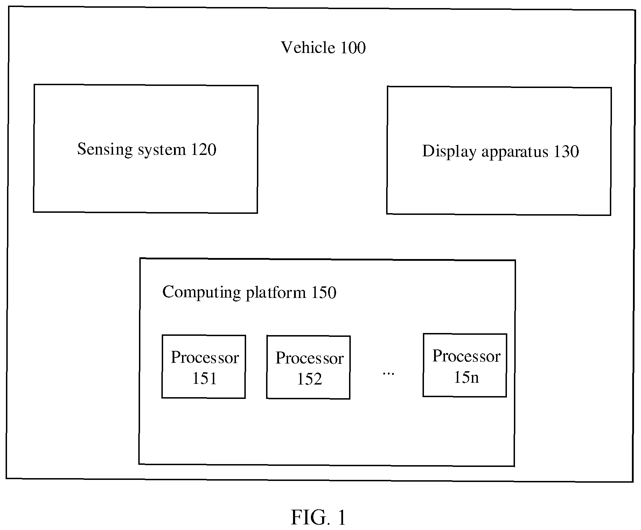

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about a surrounding environment of the vehicle 100. For example, the sensing system 120 may include a positioning system. The positioning system may be a global positioning system (global positioning system, GPS), or may be one or more of the following: a BeiDou system or another positioning system, an inertial measurement unit (inertial measurement unit, IMU), lidar, millimeter wave radar, ultrasonic radar, vision sensor, sound sensor, steering angle sensor, and an image shooting apparatus. In a running process of a vehicle, the sensing system 120 may be configured to obtain information about a surrounding environment of the vehicle, for example, road information, to determine whether the vehicle undergoes a lane change or a lane deviation. The sensing system 120 may be further configured to capture facial information, audio information, and the like of a user in the vehicle. The sensing system 120 may further include a pressure sensor that is disposed under a seat and configured to detect whether there is a user on the seat. For example, a camera and a millimeter wave radar that are in a cockpit may be configured to capture an action or a gesture of the user in the vehicle, and a microphone in the cockpit may be configured to capture a voice instruction sent by the user in the vehicle, and the like.

The display apparatus 130 in embodiments of this application is mainly a light display device, configured to display light. For example, the light display device may be a breathing light or an ambient light that includes a light emitting diode (light emitting diode, LED) strip light. The LED strip light may include a plurality of LED light beads. For example, the LED strip light may include 36 light beads or another quantity of light beads. This is not specifically limited in embodiments of this application. Alternatively, the light display device may be another type of light. Alternatively, the light display device may be an in-vehicle display screen, for example, a central control area display screen or a rear-view mirror display screen, or may be a display screen disposed at a rear part of a front seat headrest or a front central armrest.

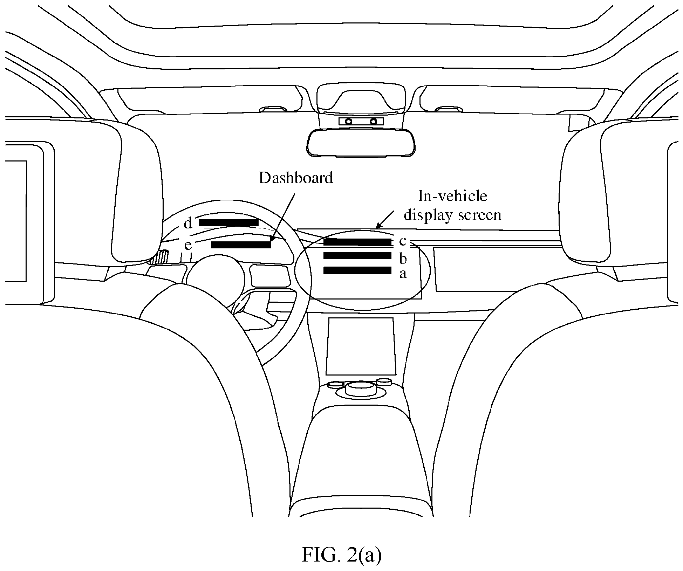

In some possible implementations, the light display device in embodiments of this application may be a light bead or a light bar, and an installation location of the light display device is shown in FIG. 2(a). For example, the light display device may be disposed at the central control area display screen or a dashboard, may be disposed on a pop-up camera, or may be disposed at another location of the cockpit. Further, the light display device may be a pop-up apparatus. For example, when the light display device is disposed at the central control area display screen, and when the light display device is not needed, the light display device may be retracted to a rear part of the display screen and not perform displaying. A disposing location may be a shown in FIG. 2(a). When the light display device displays a light signal, the light display device may be disposed at b or c in FIG. 2(a) through lifting control, or may be suspended at an upper left corner or an upper right corner of the central control display screen. When the light display device is disposed at the dashboard, a location of the light display device may be e shown in FIG. 2(a), that is, a middle location of the dashboard, or the light display device may be ascended to the top of the dashboard, that is, d shown in FIG. 2(a).

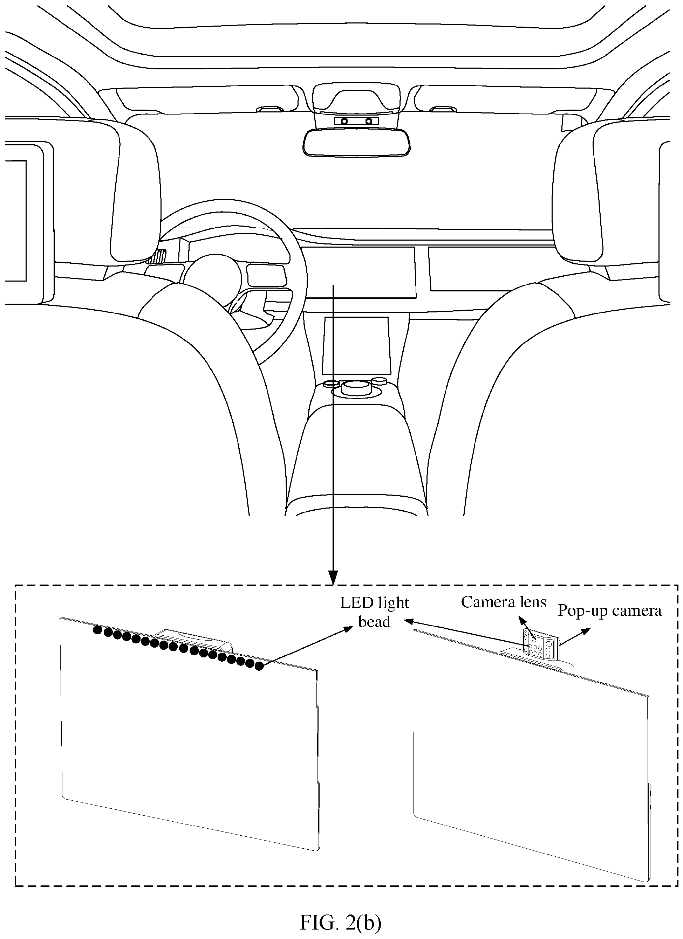

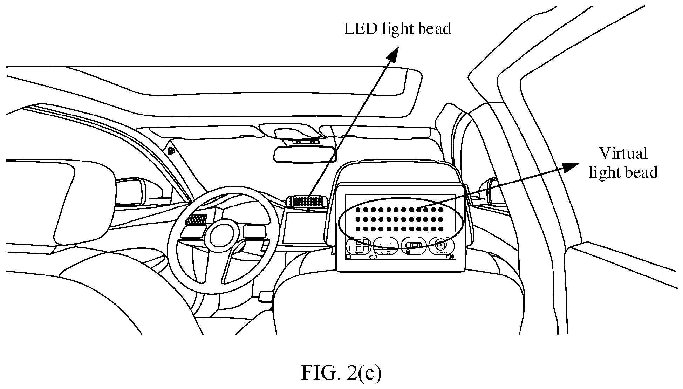

In some possible implementations, the light display device may be a light bar disposed at an edge of the central control display screen, and the light bar includes several LED light beads. Alternatively, the light display device may include LED light beads disposed on the pop-up camera, as specifically shown in FIG. 2(b). Further, the light beads in the light display device are LED light beads, or may be virtual light beads displayed in the in-vehicle display screen, as specifically shown in FIG. 2(c).

Some or all functions of the vehicle 100 may be controlled by the computing platform 150. The computing platform 150 may include processors 151 to 15n (n is a positive integer), and a processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), such as a field programmable gate array (field programmable gate array, FPGA). In the reconfigurable hardware circuit, a process in which the processor loads a configuration document to implement a configuration of the hardware circuit may be understood as a process in which the processor loads instructions to implement functions of some or all of the units. In addition, the processor may alternatively be a hardware circuit designed for artificial intelligence, which may be understood as an ASIC, for example, a neural network processing unit (neural network processing unit, NPU), a tensor processing unit (tensor processing unit, TPU), a deep learning processing unit (deep learning processing unit, DPU), or the like. In addition, the computing platform 150 may further include a memory, where the memory is configured to store instructions. Some or all processors in the processors 151 to 15n may invoke the instructions in the memory and execute the instructions to implement a corresponding function.

In this embodiment of this application, the processor may obtain environment information, vehicle driving status information, sound information, and user status information that are detected by the sensing system 120, and determine, with reference to the foregoing information, light effect displayed by the light display device. It should be understood that the foregoing "light effect" (light effect for short) includes at least one of the following: a color of the light displayed, a pattern formed by light, and dynamic effect formed by light. The dynamic effect formed by the light includes but is not limited to: color gradient, light flash, and light pulsation. The environment information may include information about an environment inside and outside a vehicle, for example, lane information, information about a location of a user outside the vehicle, lane information, and collision location information. The vehicle driving status information may include a vehicle driving speed. The sound information may include a user voice, an in-vehicle infotainment system voice, and another sound. The user status information may include head posture information, user facial information, and the like. In some possible implementations, the environment information, the vehicle driving status information, the sound information, and the user status information may alternatively be stored in the memory in the computing platform 150 in a form of data. In some possible implementations, the processor may process the environment information, the vehicle driving status information, the sound information, and the user status information, to obtain a parameterized indicator to indicate the light display device to display light. The processor may determine a first-level working mode based on a running status information of the vehicle, and further determine a specific second-level working mode and a specific third-level working mode in the first-level working mode based on information obtained from the sensing system 120, so that the light display device is controlled to display light in the third-level working mode. The running status information of the vehicle indicates whether the vehicle is in a driving status or a parking status.

It should be understood that the foregoing operations may be performed by a same processor, or may be performed by one or more processors. This is not specifically limited in embodiments of this application.

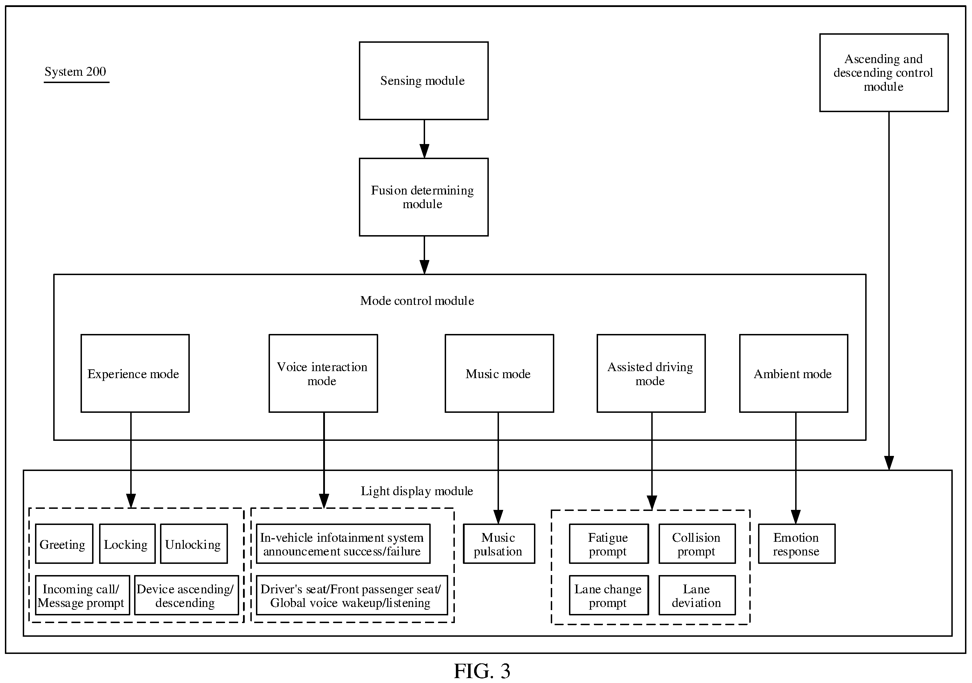

The following describes in detail a working process of a system for controlling a light display device with reference to FIG. 3. FIG. 3 is a diagram of an architecture of the system for controlling the light display device according to an embodiment of this application. The system 200 includes a sensing module, a fusion determining module, a mode control module, and a light display module. The sensing module may include one or more image shooting apparatuses and one or more sensors in the sensing system 120 shown in FIG. 1. The light display module may include one or more light display devices in the display apparatus 130 shown in FIG. 1. The fusion determining module and the mode control module may include one or more processors in the computing platform 150 shown in FIG. 1. For example, the fusion determining module may determine a first-level working mode based on information obtained from the sensing module and a vehicle running status. For example, as shown in Table 1, the first-level working mode includes a normal mode, an experience entertainment mode, and a driving assisted driving mode. The normal mode is resident. Regardless of whether a vehicle is in a driving status or a parking status, the normal mode remains constantly enabled provided that the system 200 runs. The experience entertainment mode is enabled when the vehicle is in the parking status. The driving assisted driving mode is enabled when the vehicle is in the driving status. In other words, when the vehicle is in the parking status, the first-level working mode is a mode in which the normal mode and the experience entertainment mode are enabled in parallel. When the vehicle is in the driving status, the first-level working mode is a mode in which the normal mode and the driving assisted driving mode are enabled in parallel. It should be understood that names of the foregoing modes are merely examples for description, and the foregoing modes may alternatively have other names. For example, the "driving assisted driving mode" may also be an "assisted mode". In some possible implementations, the foregoing working mode may alternatively be implemented in another manner. This is not specifically limited in embodiments of this application.

Further, when there is a conflict in displaying a light signal, the light signal is displayed based on the following priorities.

When the vehicle is driving, a priority of the driving assisted driving mode is higher than a priority of the normal mode, and the priority of the normal mode is higher than a priority of the experience entertainment mode.

When the vehicle is parking, a priority of the experience entertainment mode is higher than a priority of the normal mode.

Further, in the normal mode, the fusion determining module obtains different detection results based on information obtained from a sound sensor, an in-cockpit vision sensor, a radar sensor, and the like in combination with a speech recognition algorithm, a sound source recognition algorithm, a facial key point detection algorithm, an emotion recognition algorithm, and the like. In the experience entertainment mode, the system is bound to an in-vehicle infotainment system and an account of a mobile phone, and different detection results are obtained based on information of the in-vehicle infotainment system and the mobile phone, in combination with an audio rhythm recognition algorithm, a human body location recognition algorithm, and the like. In the driving assisted driving mode, an out-of-cockpit vision sensor and a radar sensor are turned on, and different detection results are obtained based on the speech recognition algorithm, the sound source recognition algorithm, the facial key point detection algorithm, a fatigue detection algorithm, an ADAS self-driving algorithm light, navigation information, and the like. Still further, the fusion determining module determines a second-level working mode based on the different detection results in combination with priority information, and further controls each module in the mode control module to enter a working mode.

In some possible implementations, when the vehicle is in the parking status, the driving assisted driving mode enters a sleep status. The sleep status specifically means that an algorithm function related to driving assisted driving is disabled, for example, the facial key point detection algorithm, the fatigue detection algorithm, the ADAS self-driving algorithm light, or other algorithms. In some possible implementations, a user may control enabling and disabling of each working mode. For example, in the parking status, the user may choose to disable the normal mode and enable only the experience entertainment mode. Alternatively, in the driving status, the user may choose to disable the normal mode and the experience entertainment mode and enable only the driving assisted driving mode; or the user may choose to disable the driving assisted driving mode and the experience entertainment mode, and enable only the normal mode. More specifically, the user may control enabling and disabling of each mode by using a human machine interface (human machine interface, HMI), or may control enabling and disabling of each mode in another manner.

In some possible implementations, the second-level working mode is set in the first-level working mode. For example, the second-level working mode in the normal mode includes a voice interaction mode, an ambient mode, a notification mode, and a standby mode. The second-level working mode in the parking entertainment experience mode includes an experience mode, a music mode, and an ambient mode. The second-level working mode in the driving assisted driving mode includes an assisted driving mode. For example, when receiving voice information, the fusion determining module controls the mode control module to enter the voice interaction mode. When receiving an incoming call prompt or a message prompt, the fusion determining module controls the mode control module to enter the notification mode. When receiving driving-related prompt information, the fusion determining module controls the mode control module to enter the assisted driving mode. Further, the mode control module determines a third-level working mode based on a specific information type, and controls the light display module to display light in the third-level working mode based on a mapping relationship shown in Table 1. For example, after receiving information obtained by the sound sensor, the fusion determining module notifies a voice interaction module of the mode control module to work. Further, the voice interaction module determines the third-level working mode based on a voice type. The voice type includes a location of a sound source of a voice, a voice source (for example, from the user or the in-vehicle infotainment system), and voice content. For example, if the voice type is a voice wakeup signal of a user on a driver's seat side, the voice interaction module controls a left half part of the light display device to display blue light.

In some possible implementations, when the fusion determining module simultaneously receives information obtained by a plurality of sensors, resulting in a conflict in displaying the light signal, the light signal is displayed based on priority levels shown in Table 1. Table 1 uses an example in which the light display device includes 3 rows x 12 LED light beads. Specifically, when information that can trigger a plurality of third-level working modes in a same first-level working mode is received, the priority levels are as follows. Priority levels in the normal mode are: A priority of the notification mode is higher than a priority of the voice interaction mode, and a voice interaction ambient mode, where a priority of the "incoming call prompt" in the notification mode is higher than a priority of the "message prompt". Priority levels in the experience entertainment mode are: "Locking" and "unlocking" in the experience mode > "greeting" in the experience mode > the music mode > the ambient mode > another mode in the experience mode. Priority levels in the driving assisted driving mode are: a collision reminder > a high fatigue reminder > a lane deviation reminder > a lane change reminder > a seat belt reminder > a moderate fatigue reminder > a mild fatigue reminder. It should be understood that ">" indicates that a priority of a mode on the left side of the symbol is higher than a priority of a mode on the right side of the symbol. In some possible implementations, the fusion determining module may simultaneously receive information that can separately trigger different third-level working modes in two first-level working modes, for example, simultaneously receive the incoming call prompt (in the normal mode) and the collision reminder (in the driving assisted driving mode). In the driving status, the priority of the driving assisted driving mode is higher than the priority of the normal mode. Therefore if the fusion determining module determines, based on vehicle status information, that the vehicle is in the driving status, the fusion determining module sequentially controls the assisted driving mode and the notification mode in the mode control module to enter a working status. Further, the mode control module controls the light display module to first display a light signal associated with the collision reminder, and then display a light signal associated with the incoming call prompt.

For example, in Table 1, red, blue, and yellow in safety colors specified in the Chinese national standard GB2893-82 are used as light colors for information reminder, and different light colors represent different semantics, as specifically shown below.

Blue: voice;
Gray: failure;
Red: warning; and
Green: message and incoming call.

In some possible implementations, another cool color may be used to perform voice interaction with the user or provide the message prompt or the incoming call prompt. The cool color means a color close to a green family in a color spectrum, for example, green, blue, purple, or the like. The cool color can make a driver feel warm, calm, and peaceful. Another color with warning effect such as yellow or orange may be used to remind warning information. This can associate the driver's mode while driving with an ambient light, so that the user has better interaction experience.

In addition, when the light colors are the same, a rhythm of light flash is controlled to represent different warning levels. For example, a rhythm of a red-orange light pulsation corresponding to a high fatigue prompt is faster than that corresponding to a moderate fatigue prompt, and a rhythm at which light beads flash in red corresponding to the lane deviation reminder is faster than that corresponding to the lane change reminder. In some possible implementations, when the light colors are the same, brightness of light may represent different warning levels. For example, light with low brightness is used to display a low warning level.

In some possible implementations, when light signals are switched, the mode control module can further determine a color change in a switching process based on light colors and brightness of the light signals before and after the switching, to form gradient effect.

**Table 1 Mapping relationship between working modes and light display effect (using a total of three rows and 12 light beads per row as an example)**

| Normal mode | Standby mode | Standby (default) | Rainbow gradient color, gradient transition in a rolling manner in up and down directions | Priority |
|---|---|---|---|---|
| | Voice interaction mode | Driver's seat voice wakeup | Blue (3 rows * 3 light beads on the left side) | 2 |
| | | Front passenger seat voice wakeup | Blue (3 rows * 3 light beads on the right side) | |
| | | Global voice wakeup | Blue (all light beads) | |
| | | Driver's seat listening | Blue (3 rows * 3 light beads on the left side, with gra-dient color) | |
| | | Front passen-ger seat listen-ing | Blue (3 rows * 3 light beads on the right side, with gradient color) | |
| | | Global listening | Blue (all light beads, with gradient color) | |
| | | Driver's seat in-vehicle info-tainment sys-tem announce-ment - success (successfully received, and announcement ended) | The rainbow gradient color (3 rows * 3 light beads on the left side) | |
| | | Passenger seat in-vehicle infotainment system announcement - success | The rainbow gradient color (3 rows * 3 light beads on the right side) | |
| | | Global in-vehi-cle infotain-ment system | The rainbow gradient color (all light beads) | |

(continued)

| Normal mode | Standby mode | Standby (default) | Rainbow gradient color, gradient transition in a rolling manner in up and down directions | Priority |
|---|---|---|---|---|
| | | announcement - success | | |
| | | In-vehicle infotainment system announcement - failure (unintelligible, and a network error) | Gray (all light beads) | |
| | Ambient mode | Sad feedback | Colorful smiling face mode | 3 |
| | | Happy feedback | White wavy eye mode | |
| | | Sickness feedback (sneezing/cold indicated by a driver voice) | Blue layered water ripple pattern | |
| | Notification mode | Incoming call prompt | Gradient transition from green in a center to white at an edge, flashing | 1.1 |
| | | Message prompt | Gradient transition from green in a center to white at an edge, which evolves dynamically | 1.2 |
| Experience entertainment mode | Experience mode | Greeting | Greetings are respectively provided at four doors; and if someone appears at a location, 6 light beads at a corresponding location display a rainbow gradient color for a short period | 2 |
| | | Locking | The rainbow gradient color appears from both sides to a center | 1.1 |
| | | Unlocking | The rainbow gradient color disappears from a center to both sides | 1.2 |
| | | Camera ascending (gesture and button) | A white arrow points up | 4.1 |
| | | Camera descending (gesture and button) | A white arrow points down | 4.2 |
| | Music mode | Music listening pulsation | The color jumps with a rhythm and changes based on a height | 3.1 |
| | | Karaoke pulsation | The color jumps with a rhythm and changes based on a height | 3.2 |
| | Ambient mode | Greeting show | A set of programmed variable light effect, which can be presented independently or in conjunction with another light/audio light | 3.3 |

(continued)

| Normal mode | Standby mode | Standby (default) | Rainbow gradient color, gradient transition in a rolling manner in up and down directions | Priority |
|---|---|---|---|---|
| Driving as-sisted driving mode | Assisted driving mode | Mild fatigue prompt | Light beads flash in red (all light beads) | 2.3 |
| | | Moderate fatigue prompt | Red-orange light pulsation (all light beads) | 2.2 |
| | | High fatigue prompt | Red-orange light pulsation (all light beads) | 1.2 |
| | | Seat belt reminder | A location at which a seat belt is not fastened as specified is mapped to light beads at a corresponding location-when a seat belt at a driver's seat is not fastened as specified, it is mapped to 3 rows * 3 light beads on the left side; or when a seat belt at a front passenger seat is not fastened as specified, it is mapped to 3 rows * 3 light beads on the right side; and light beads at corresponding locations flash in red | 2.1 |
| | | Lane deviation reminder | A Z-shaped pattern or a reverse Z-shaped pattern points to a deviation direction; and light beads flash in red | 1.3 |
| | | Collision reminder | A collision location that is relative to a location of a vehicle is mapped to light beads at a corresponding location; a front collision is mapped to a corresponding location in a first row; and a rear collision is mapped to a corresponding location in a third row; and three light beads at a corresponding location flash in red | 1.1 |
| | | Lane change reminder | A Z-shaped pattern or a reverse Z-shaped pattern points to a lane change direction; and light beads flash in red | 1.4 |

The mode control module may further control a location of the light display device based on a display priority and content represented by the light signal. For example, the light display device is disposed at a central control area display screen. Before the system 200 is turned on, the light display device is behind the display screen, does not perform display, and is at a low location. After the system 200 is turned on, the light display device is controlled to ascend to a location that is on the central control area display screen and that is closely attached to an upper part of the display screen (referred to as an intermediate location for short), namely, the location shown in FIG. 2(b). When the content represented by the light signal is warning content of a high priority, the light display device may be controlled to ascend to a location (referred to as an advanced location for short) that is above the display screen and that is at a specific distance from the display screen, namely, the location shown in FIG. 2(c).

In addition, the mode control module can further generate corresponding light effect based on a user operation, and control the light display module to perform display. For example, light effect that can be selected by the user may be given. After selecting light effect, the user may select a color of the light. Then, the mode control module generates light effect online based on the light effect and the color of the light that are selected by the user. For example, a light effect selection interface and a color selection interface may be provided for the user through a human machine interface such as the HMI. Alternatively, after the vehicle is connected to the mobile phone of the user, a light effect selection interface and a color selection interface are provided for the user through an interface of the mobile phone. Alternatively, a light effect selection interface and a color selection interface may be provided for the user in another manner. This is not specifically limited in embodiments of this application.

It should be understood that the foregoing modules and apparatuses are merely examples. During actual application, the foregoing modules and apparatuses may be added or deleted according to an actual requirement. For an example, the fusion determining module and the mode control module in FIG. 3 may be combined into one module. That is, functions of the fusion determining module and the mode control module are implemented by one module. For another example, both the fusion determining module and the mode control module may be included in the light display module.

As mentioned above, the ambient light in the vehicle mainly features monochrome display, and includes few colors. When a color change is needed, two similar colors are mainly used, and it is difficult to implement color jump. As a result, there are few interactive light signals that are difficult to understand, and driving experience of the user is poor. Currently, most ambient lights are mainly for entertainment and gaming purposes and feature poor human-machine interaction. In addition, ambient lights are usually disposed below doors of the vehicle and a front windshield of the vehicle. The ambient lights at the doors of the vehicle are inconvenient for the driver to view. The ambient lights at the windshield of the vehicle are usually blocked by various screens, and as a result, the driver cannot obtain, in time, information that the light signal intends to convey. In view of this, embodiments of this application provide a method and an apparatus for controlling the light display device. The light display device can be controlled based on the vehicle running status, the vehicle driving status, a driver status, and the like, so that the light display device displays different light effect in different cases, to represent different light signals. This improves interaction between the light display device and the user, and helps improve driving experience of the user. In addition, according to the method for controlling the light display device provided in embodiments of this application, light effect can be further determined and displayed based on the light effect and the color of the light that are selected by the user, to further improve driving experience of the user in terms of interaction.

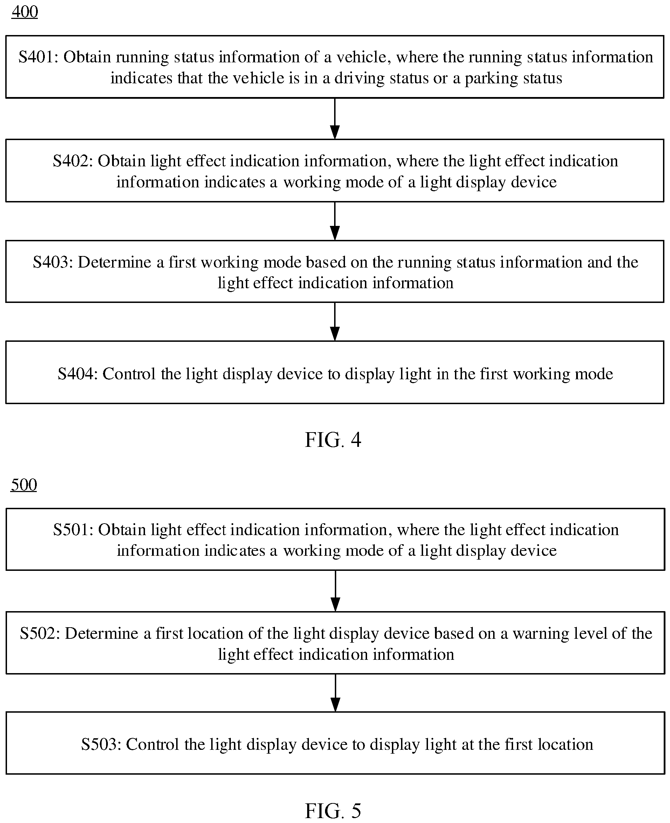

FIG. 4 shows a method 400 for controlling a light display device according to an embodiment of this application. The method 400 may be applied to the vehicle 100 shown in FIG. 1, and the method may be further performed by the system shown in FIG. 3. Steps or operations of the method for controlling the light display device shown in FIG. 4 are merely examples for description. In this embodiment of this application, other operations or variations of the operations in FIG. 4 may be further performed. The method 400 includes the following steps.

S401: Obtain running status information of a vehicle, where the running status information indicates that the vehicle is in a driving status or a parking status.

In some possible implementations, a priority level of a first-level working mode is determined based on the running status information. For example, if the vehicle is in the driving status, then in the first-level working mode, a priority of a driving assisted driving mode is higher than a priority of a normal mode, and the priority of the normal mode is higher than a priority of an experience entertainment mode. If the vehicle is in the parking status, then in the first-level working mode, a driving assisted driving mode is in a sleep status, and a priority of an experience entertainment mode is higher than a priority of a normal mode.

S402: Obtain light effect indication information, where the light effect indication information indicates a working mode of the light display device.

For example, the light effect indication information may include information determined based on data obtained by a sensor.

For example, the light effect indication information may include the following information:

driver's seat/front passenger seat/global voice wakeup information, which may be information generated based on a wakeup instruction that is of a user at a driver's seat/front passenger seat/another location and that is detected by a sound sensor. For example, the wakeup instruction may be a voice instruction for waking up an in-vehicle infotainment system at a corresponding location of the vehicle. After the in-vehicle infotainment system is woken up, a dialogue may be performed with the in-vehicle infotainment system by using a voice, or the in-vehicle infotainment system may be controlled by using a voice to perform a related operation, such as turning on music, turning off an air conditioner, or another operation. In some possible implementations, the driver's seat/front passenger seat/global voice wakeup information may alternatively be information generated based on an operation of the user. For example, if the user can wake up the in-vehicle infotainment system by pressing and holding a button (for example, a home button) that is of the in-vehicle infotainment system and that is with a function of returning to a home screen, the driver's seat/front passenger seat/global voice wakeup information may be generated based on the operation of pressing and holding the home button;

driver's seat/front passenger seat/global listening status information, which may be information generated in response to a voice wakeup instruction. For example, after being turned on in response to the wakeup instruction, the in-vehicle infotainment system may enter a listening status. In this case, the driver's seat/front passenger seat/global listening status information may be generated based on notification information indicating that the in-vehicle infotainment system enters the listening status;

driver's seat/front passenger seat/global in-vehicle infotainment system announcement success information, which may be information generated based on a message that is announced by the in-vehicle infotainment system at a driver's seat/front passenger seat/another location and that is detected by the sound sensor;

in-vehicle infotainment system announcement failure information, which may be information generated based on content that is announced by the in-vehicle infotainment system and that is detected by the sound sensor and cannot be parsed. For example, when a part of the content announced by the in-vehicle infotainment system is missing due to a poor network status, the in-vehicle infotainment system announcement failure information may be generated;

greeting information, which may be information generated based on a location of a passenger in the vehicle and a distance between the passenger and the vehicle that are detected by a radar sensor or an out-of-cockpit vision sensor. For example, when it is detected that the passenger approaches a right rear door of the vehicle, and the distance between the passenger and the vehicle is less than a preset distance, right rear door greeting information is generated;

emotion status information, which may be information generated based on facial information that is of the user and that is obtained by an image shooting apparatus or an in-cockpit vision sensor. Emotions may be divided into joy, sadness, anger, and disgust based on human facial expressions. An emotion status of the user may be represented by using a multi-dimensional vector. To be specific, different combinations of emotion dimensions correspond to different dimensional emotion spaces, each emotion dimension should have a value range, and a value of the emotion dimension may be at any location within the value range. Any emotion can be represented by a set of values that represent a location of the emotion in a dimensional emotion space. After classification of emotion statuses of the user is completed, the emotion status information of the user may be obtained, where the emotion status information indicates the emotion status of the user. For example, the emotion status information may be information obtained by processing facial information according to a facial key point detection algorithm and an emotion recognition algorithm. Alternatively, the emotion status information may be information obtained by performing an emotion analysis on a voice of the user. For example, emotion analysis may be performed, by using a common machine learning classifier, a spectrogram, and a deep learning model, on voice information input by the user. After emotions of the user are classified, the emotion status information may be refined into sad feedback information, happy feedback information, and sick feedback information corresponding to those in Table 1;

fatigue driving reminder information, which may be information generated based on facial information that is of the user and that is obtained by the image shooting apparatus or the in-cockpit vision sensor. For example, the fatigue driving reminder information may be information obtained by processing the facial information according to the facial key point detection algorithm and a fatigue detection algorithm;

lane change reminder information/lane deviation reminder information, which may be information determined based on road information obtained by the out-of-cockpit vision sensor and the radar sensor in combination with navigation information. In some possible implementations, the lane change reminder information and/or the lane deviation reminder information may be determined according to a self-driving algorithm; and

collision reminder information, which may be information generated based on a collision location detected by the radar sensor or the out-of-cockpit vision sensor.

In addition to the foregoing information, the light effect indication information may further include in-vehicle camera ascending and descending control information, seat belt reminder information, incoming call/message prompt information, vehicle locking information, vehicle unlocking information, and the like.

The driver's seat/front passenger seat/global listening status information, the driver's seat/front passenger seat/global in-vehicle infotainment system announcement success information, the in-vehicle infotainment system announcement failure information, the emotion status information, and the incoming call/message prompt information indicate a third-level working mode in the normal mode. The greeting information, music rhythm information, the in-vehicle camera ascending and descending control information, the vehicle locking information, and the vehicle unlocking information indicate a third-level working mode in the experience entertainment mode. The fatigue driving reminder information, the lane change reminder information/lane deviation reminder information, the collision reminder information, and the seat belt reminder information indicate a third-level working mode in the driving assisted driving mode.

S403: Determine a first working mode based on the running status information and the light effect indication information.

In some possible implementations, if the light effect indication information includes one piece of information, the first working mode is determined based on the light effect indication information. For example, if the piece of information is the in-vehicle infotainment system announcement failure information, it is determined that the first working mode is an in-vehicle infotainment system announcement failure mode.

In some possible implementations, if the light effect indication information includes a plurality of pieces of information, a first-level working mode corresponding to the plurality of pieces of information is determined based on the light effect indication information, a priority level of a third-level working mode indicated by the plurality of pieces of information is determined, and a third-level working mode with a highest priority level is determined as the first working mode. For example, the priority level of the third-level working mode is preset by the system, as shown in Table 1. Alternatively, the priority level of the third-level working mode may be set by the user. For an example, the plurality of pieces of information correspond to a same first-level working mode, for example, include the greeting information, the music rhythm information, and the vehicle locking information. Because vehicle locking has a highest priority, a locking mode is determined as the first working mode. For another example, the plurality of pieces of information correspond to different first-level working modes, for example, include the lane change reminder information, driver's seat voice wakeup information, and the music rhythm information. Because the driving assisted driving mode corresponding to the lane change reminder information has a highest priority, a lane change reminder mode is determined as the first working mode.

S404: Control the light display device to display light in the first working mode.

For example, for light effect of the light display device in different working modes, refer to the descriptions in Table 1. Details are not described herein again.

In some possible implementations, the light display device may be an apparatus, for example, an LED light disposed at a central control area display screen, or a central control area display screen. Alternatively, the light display device may be a plurality of apparatuses, for example, including two display screens each disposed at a rear part of a front seat headrest and a central control area display screen. Further, the first working mode may be a working mode shown in Table 1, or may include that light display devices at different locations display light. For example, in a greeting mode, when the user is seated in a rear seat, a display screen on the rear part of the front seat headrest may display light in the greeting mode.

It should be understood that when the light effect indication information includes the plurality of pieces of information, S403 and S404 are repeatedly performed based on the priority level of the third-level working mode indicated by the light effect indication information, until all the light effect indication information is performed.

In some possible implementations, the user may alternatively control enabling and disabling of the third-level working mode through a human machine interface such as an HMI.

According to the method for controlling the light display device provided in this embodiment of this application, the light display device can be controlled based on a vehicle running status, a vehicle driving status, a driver status, and the like, so that the light display device displays different light effect in different cases, to represent different light signals. This improves interaction between the user and the light display device, and helps improve driving experience of the user.

FIG. 5 shows another method 500 for controlling a light display device according to an embodiment of this application. The method 500 may be applied to the vehicle 100 shown in FIG. 1, and the method may be further performed by the system shown in FIG. 3. The method 500 includes the following steps.

S501: Obtain light effect indication information, where the light effect indication information indicates a working mode of the light display device.

For detailed content, refer to the descriptions in S402. Details are not described herein again.

S502: Determine a first location of the light display device based on a warning level of the light effect indication information.

For example, the first location may be one of the foregoing low location, intermediate location, and advanced location.

In some possible implementations, the warning level may be determined based on a priority of the working mode indicated by the light effect indication information. Further, for light effect indication information with a high warning level, it is determined that the first location is the advanced location. For light effect indication information with a low warning level, it is determined that the first location is the intermediate location. It should be understood that the advanced location may alternatively be another location that is conspicuous and easy to be viewed by a driver. The intermediate location may be a normal location when the light display device is turned on.

In some possible implementations, the warning level specifically means an importance level of light effect that plays a warning role to a user, and the light effect that plays the warning role may include light effect displayed in a third-level working mode in a driving assisted driving mode. For an example, in fatigue prompt information, a warning level of a high fatigue prompt is higher than a warning level of a moderate fatigue prompt. In this case, if the light effect indication information includes high fatigue prompt information, it is determined that the first location is the advanced location. For another example, a warning level of a lane deviation reminder is higher than a warning level of a lane change reminder. If the light effect indication information includes the lane deviation reminder, it is determined that the first location is the advanced location.

For example, the advanced location may be a location c or a location d shown in FIG. 2(a), and the intermediate location may be a location b or a location e shown in FIG. 2(a).

S503: Control the light display device to display light at the first location.

According to the method for controlling the light display device provided in this embodiment of this application, when light effect of a high warning level is displayed, the light display device is controlled to be at a high location, so that a driver can be prevented from missing important warning information. This improves interaction between the light display device and the driver, and further improves driving experience and driving safety.

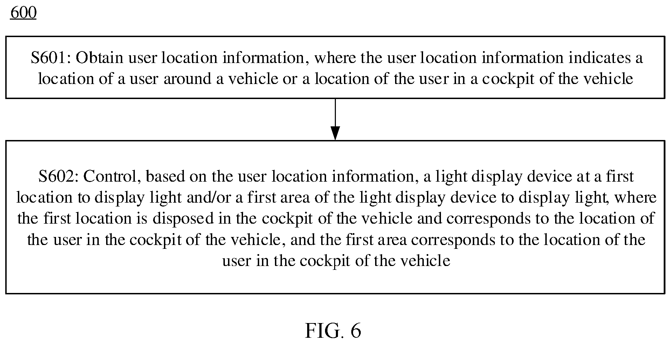

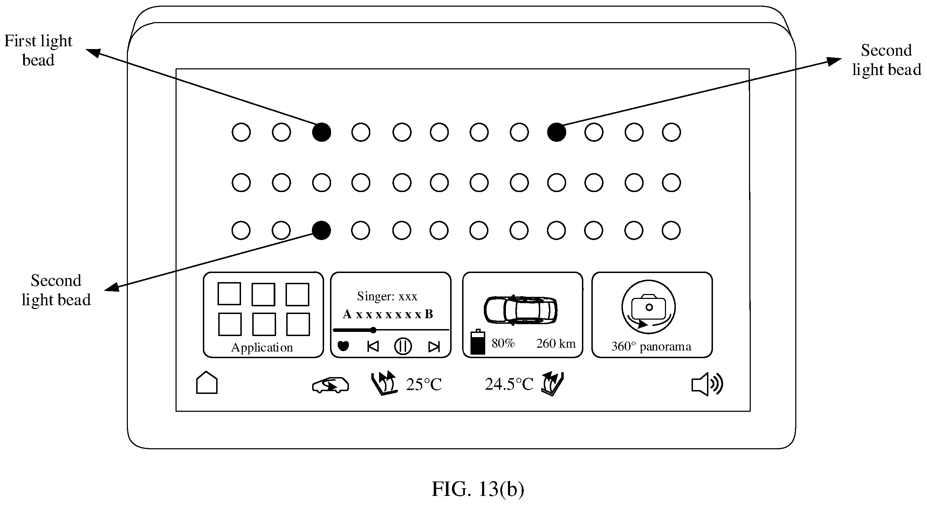

A specific working process for controlling the light display device to display light based on the light effect indication information is described above with reference to FIG. 4 and FIG. 5. The following describes a specific working process of the light display device in different scenarios with reference to FIG. 6 to FIG. 13(a) and FIG. 13(b).

FIG. 6 shows still another method 600 for controlling a light display device according to an embodiment of this application. The method 600 may be applied to the vehicle 100 shown in FIG. 1, and the method may be further performed by the system shown in FIG. 3. The method 600 includes the following steps.

S601: Obtain user location information, where the user location information indicates a location of a user around a vehicle or a location of the user in a cockpit of the vehicle.

For example, the location information may indicate a location of the user outside the vehicle, or may indicate a location of the user in the cockpit of the vehicle.

In some possible implementations, a portable terminal of the user, such as a mobile phone, a vehicle key, or an electronic wallet, is detected by using a wireless short-range communication system such as a UWB or BLE of the vehicle, and then the user location information is determined by using the wireless short-range communication system such as the UWB or the BLE.

In some possible implementations, it is detected by using a radar sensor of the vehicle that the user approaches the vehicle, and user location information is determined by using the radar sensor.

In some possible implementations, the user location information is determined by using an in-cockpit camera of the vehicle.

S602: Control, based on the user location information, a light display device at a first location to display light and/or a first area of the light display device to display light, where the first location is in the cockpit of the vehicle and corresponds to the location of the user in the cockpit of the vehicle, and the first area corresponds to the location of the user in the cockpit of the vehicle.

In some possible implementations, a second working mode of the light display device may be determined based on the user location information, and then the light display device is controlled to display light in the second working mode.

For an example, when the location of the user is outside the vehicle, and a distance between the user and the vehicle gradually decreases, it may be determined that the second working mode is a greeting show mode.

For another example, when the location of the user is in the vehicle, it is determined that the second working mode is a greeting mode. More specifically, in a process in which the user enters the vehicle from outside the vehicle, the light display device may first display greeting show light, and then display greeting light. Further, when the user enters the vehicle, a location of light beads that are in the light display device and that are for displaying the greeting light may be determined based on the user location information.

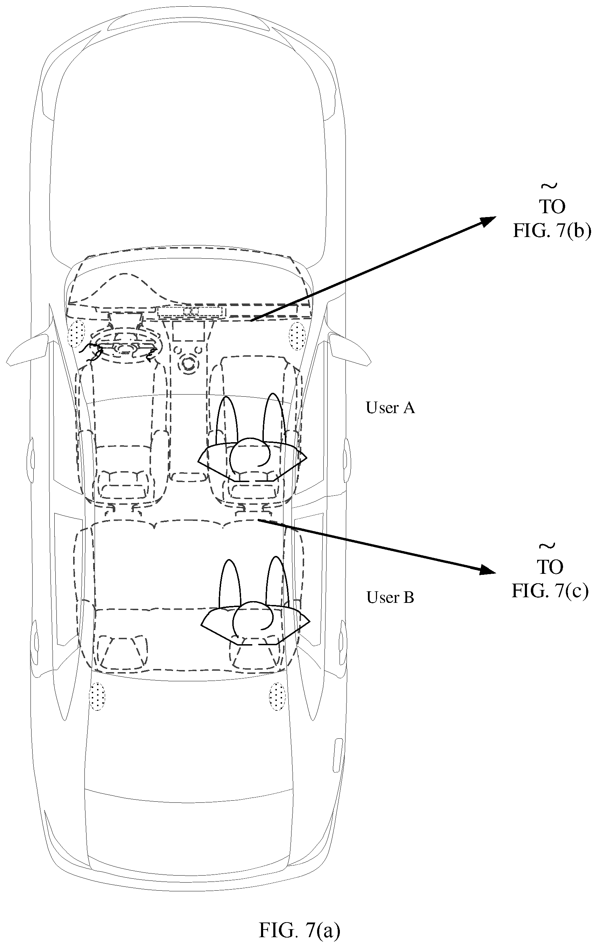

For still another example, that the second working mode is determined based on the user location information may include determining, based on the user location information, a location of a light display device that display light. For example, as shown in FIG. 7(a), when it is determined that a user A is seated in a front passenger seat, a light display device at the front passenger seat is controlled to enter a working mode. Further, within preset duration after the user A enters the vehicle, it is determined that the second working mode is a front passenger seat greeting mode.

In some possible implementations, that the second working mode of the light display device is determined based on the user location information may further include determining the second working mode based on the user location information and a user emotion status. When it is determined that a user B is seated in a rear right seat, a light display device disposed behind the front passenger seat is controlled to enter a working mode. For example, facial information of the user B is obtained by using an in-cockpit image shooting apparatus, or voice information of the user B is obtained by using a sound sensor. Then, an emotion status of the user B is determined, and it is determined, based on the emotion status of the user B, that the working mode of the light display device behind the front passenger seat is an emotion feedback mode.

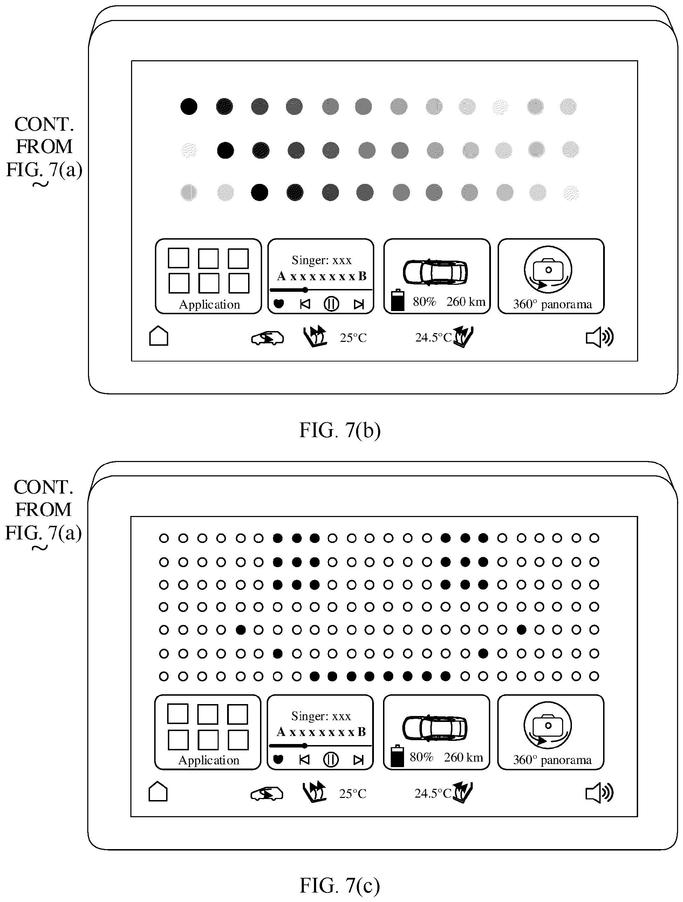

For example, when it is determined that the second working mode is a front passenger seat greeting mode, the light display device at the front passenger seat may be controlled to display color gradient light as shown in FIG. 7(b).

For example, when it is determined that the second working mode is a sad feedback mode of the rear right seat, the light display device behind the front passenger seat may be controlled to display light of a smiling face pattern as shown in FIG. 7(c).

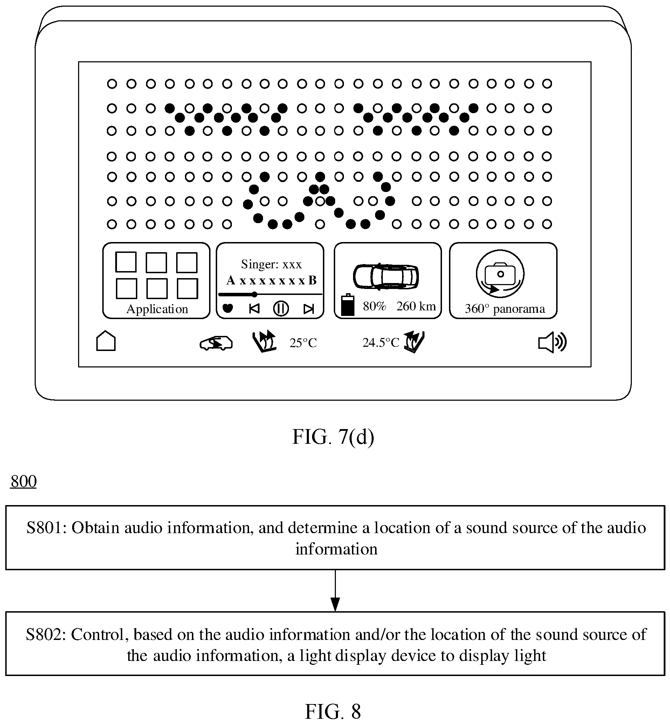

For example, when it is determined that the second working mode is a happy feedback mode of the rear right seat, the light display device behind the front passenger seat may be controlled to display light of a cute "W"-shaped pattern as shown in FIG. 7(d).

According to the method for controlling the light display device provided in this embodiment of this application, a mode of a device that displays light can be determined based on the user location information. This improves driving experience of the user in terms of human-computer interaction. More specifically, according to the method for controlling the light display device provided in this embodiment of this application, a location of the device that displays light can be further determined, so that interaction between the light display device and the user is more personalized, and interaction between the light display device and a specific user can be prevented from affecting another user. This further improves driving experience of the user.

FIG. 8 shows yet another method 800 for controlling a light display device according to an embodiment of this application. The method 800 may be applied to the vehicle 100 shown in FIG. 1, and the method may be further performed by the system shown in FIG. 3. The method 800 includes the following steps.

S801: Obtain audio information, and determine a location of a sound source of the audio information.

For example, the audio information may be audio information obtained after various types of invalid audio information is excluded from captured audio information inside the vehicle, and the invalid audio information may be audio information with an excessively low volume. The location of the sound source may be a location of a sound source corresponding to the audio information. The location of the sound source may be a relative location of a light display device that is located based on the sound source, or may be specific location coordinates. This is not specifically limited in embodiments of this application.

For example, the location of the sound source may be determined according to a time difference of arrival (time difference of arrival, TDOA) principle based on audio information captured by a plurality of sound sensors. For example, if sound sensors A and B respectively detect that audio is emitted from a sound source S, where time at which a sound source signal of the sound source S arrives at the sound sensor A is t1, and time at which the sound source signal of the sound source S arrives at the sound sensor B is t2, then a time difference dt = |t1 - t2|. If a distance between the sound source S and the sound sensor A is set to AS, a distance between the sound source S and the sound sensor B is set to BS, and a sound speed is set to c, dt = t1 - t2 = AS/c - BS/c may be obtained. Then, based on a distance a between the two sound sensors, one of the sensors is selected as a reference point, and the location of the sound source may be determined.

In some possible implementations, the audio information may be a voice including a specific wakeup word, for example, "turn on the in-vehicle infotainment system", "turn on the smart screen", "turn on the interactive device", or the like. Alternatively, the audio information may be voice information input by a user within preset time in which an interactive device such as an in-vehicle infotainment system is woken up, or may be audio information announced by an interactive device such as an in-vehicle infotainment system in response to voice information input by a user.

S802: Control, based on the audio information and/or the location of the sound source of the audio information, the light display device to display light.

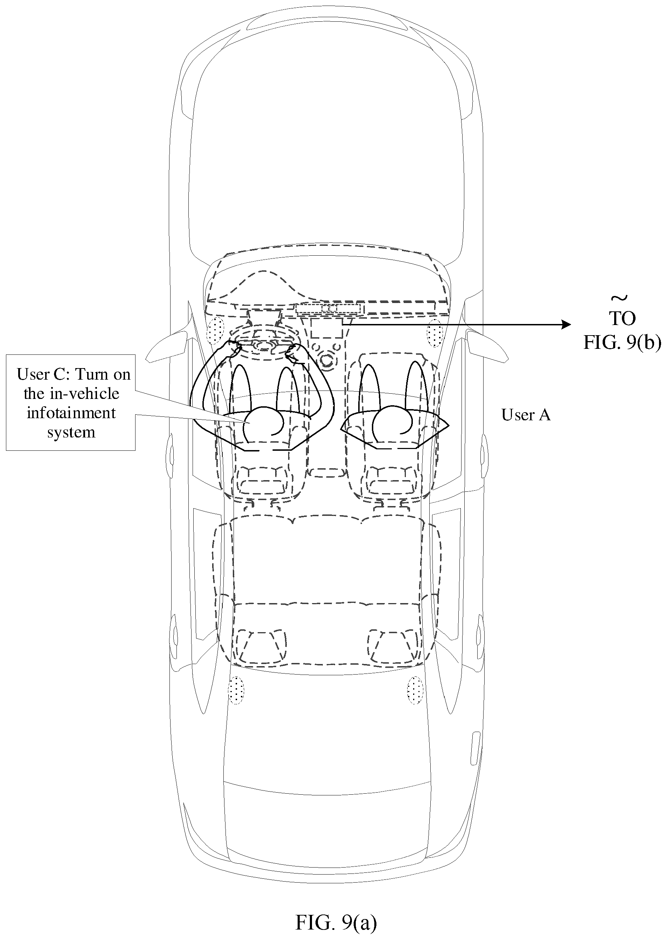

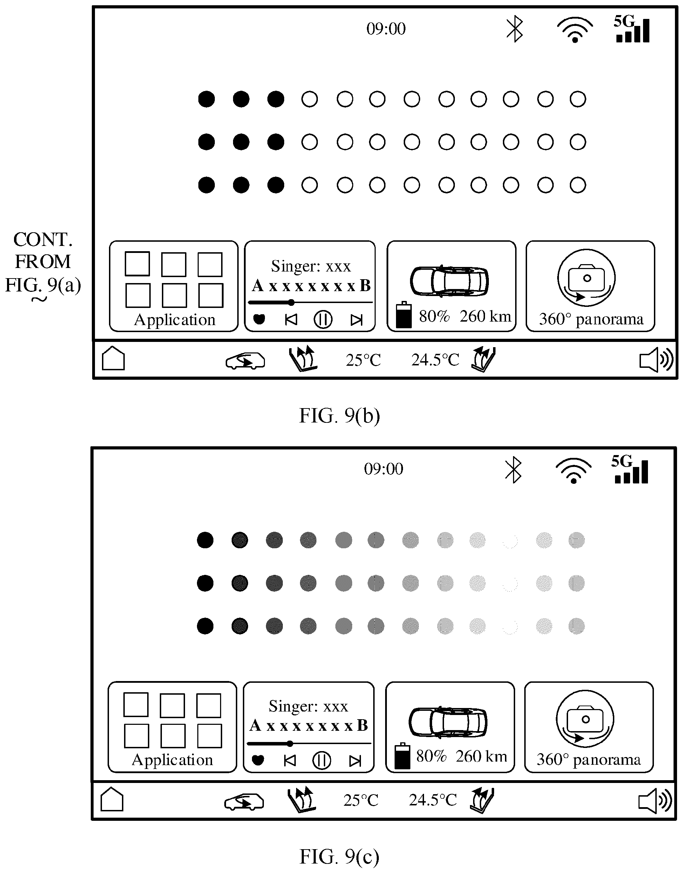

In some possible implementations, after the location of the sound source of the audio information is determined, a location of a light bead that displays light and that is in the light display device is determined, and light displayed by the light bead in the corresponding location is further determined based on content of the audio information. For an example, as shown in FIG. 9(a), when it is determined that the audio information comes from a user C at a driver's seat, and the audio information includes the wakeup word, 3 * 3 rows of light beads on a left side of the light display device display blue light, that is, the determined working mode of the light display device is a driver's seat voice wakeup mode, as specifically shown in FIG. 9(b). For another example, if the voice information input by the user is detected within preset duration in which a global in-vehicle infotainment system is woken up, the light display device displays blue gradient light, that is, the determined working mode of the light display device is a global in-vehicle infotainment system listening mode, as specifically shown in FIG. 9(c). For still another example, the in-vehicle infotainment system performs audio announcement in response to the voice information input by the user, and audio announced by the in-vehicle infotainment system that is obtained by the sound sensor is parsed. If content announced by the in-vehicle infotainment system is clear and easy to understand, for example, if the content announced by the in-vehicle infotainment system that is obtained through parsing is "It's going to be sunny all day today. Remember to wear sunscreen", the light display device is controlled to display color gradient light, that is, the determined working mode of the light display device is an in-vehicle infotainment system announcement success mode. If content announced by the in-vehicle infotainment system is unclear or difficult to understand, for example, the content announced by the in-vehicle infotainment system obtained through parsing is "It's...sunny...today. Remember...sunscreen", the light display device is controlled to display gray light, that is, the determined working mode of the light display device is an in-vehicle infotainment system announcement failure mode.

In some possible implementations, the audio information includes a wakeup word including location information. For example, if audio content input by the user C at the driver's seat is "Turn on the in-vehicle infotainment system at the front passenger seat", the in-vehicle infotainment system at the front passenger seat is turned on in response to a wakeup instruction of the user C. In this case, a light bead in an area that is on the light display device and that is corresponding to the front passenger seat may be controlled to display light.

It should be noted that, in the in-vehicle infotainment system listening mode, a start moment of light display may be a moment at which it is detected that the user inputs voice information within the preset duration in which the global in-vehicle infotainment system is woken up, and an end moment of light display is a moment at which the user stops inputting the voice. In a process in which the user inputs the voice, there may be a plurality of pauses. When pause duration is greater than a preset threshold, it is considered that the voice input ends, and light display is stopped. In some possible implementations, the preset duration may be 5 seconds or 7 seconds, or may be other duration, and the preset threshold may be 3 seconds, 5 seconds, or 7 seconds, or may be other duration. This is not specifically limited in embodiments of this application.

In some possible implementations, that the working mode is determined based on the audio information and the location of the sound source of the audio information may include determining, based on the location of the sound source of the audio information, a location of a light display device that displays light, and further determining, based on the audio information, a working mode of the light display device at the location. For example, when it is determined that the audio information comes from the user C at the driver's seat, a light display device at the driver's seat is controlled to display corresponding light. More specifically, when the audio information is a voice that comes from the user and that includes a specific wakeup word, the "corresponding light" may be blue light displayed by the light display device at the driver's seat. When the audio information is the voice information input by the user within the preset time in which the interactive device such as the in-vehicle infotainment system is woken up, the "corresponding light" may be blue gradient light displayed by the light display device at the driver's seat. When the audio information is the audio announced by the in-vehicle infotainment system, the "corresponding light" may be gradient light or gray light displayed by the light display device at the driver's seat.

In some possible implementations, an emotion status of the user may be further determined by using voice information of the user obtained by the sound sensor, and then, a color of the light is determined based on the emotion status of the user. For example, the emotion status of the user may be determined by performing voice emotion analysis on the voice information input by the user. Further, when a user emotion is determined as sad, a light display color may be set to a color in a warm color system, for example, red purple, red, orange, yellow, or another color.

According to the method for controlling the light display device provided in this embodiment of this application, the working mode of the light display device can be determined based on the location of the sound source of the audio and content of the audio. When the content of the audio and the user emotion are different, content represented by a light signal of display light is also different. This can improve interaction experience of the user in a use process.

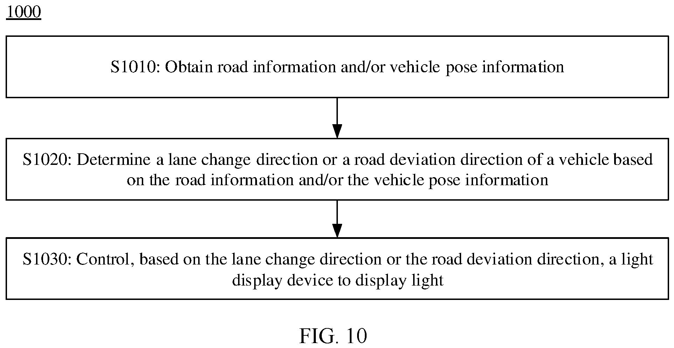

FIG. 10 shows still yet another method 1000 for controlling a light display device according to an embodiment of this application. The method 1000 may be applied to the vehicle 100 shown in FIG. 1, and the method may be further performed by the system shown in FIG. 3. The method 1000 includes the following steps.

S1010: Obtain road information and/or vehicle pose information.

For example, the road information may include lane line information, and the vehicle pose information may include at least one of vehicle heading angle information and steering wheel angle information.

S1020: Determine a lane change direction or a road deviation direction of a vehicle based on the road information and/or the vehicle pose information.

In some possible implementations, it is determined, based on a change rate of a vehicle heading angle or a change rate of a steering wheel angle, whether the vehicle undergoes a road deviation or a lane change, and the road deviation direction or the lane change direction. For an example, when an absolute value of the change rate of the heading angle is greater than a first threshold and less than or equal to a second threshold, it is determined that the vehicle undergoes the road deviation. When an absolute value of the change rate of the heading angle is greater than a second threshold, it is determined that the vehicle undergoes the lane change. For another example, when an absolute value of the change rate of the steering wheel angle is greater than a third threshold and less than or equal to a fourth threshold, it is determined that the vehicle undergoes the road deviation. When an absolute value of the change rate of the steering wheel angle is greater than a fourth threshold, it is determined that the vehicle undergoes the lane change. For still another example, whether the vehicle undergoes the lane change or the road deviation is determined based on an included angle between a driving direction of the vehicle and a lane line. For example, when the included angle between the driving direction of the vehicle and the lane line is greater than a fifth threshold and less than or equal to a sixth threshold, it is determined that the vehicle undergoes the road deviation. When the included angle between the driving direction of the vehicle and the lane line is greater than a sixth threshold, it is determined that the vehicle undergoes the lane change.

In some possible implementations, when the vehicle deflects to the right side, the change rate of the steering wheel angle and the change rate of the heading angle are set to positive. When the vehicle deflects to the left side, the change rate of the steering wheel angle and the change rate of the heading angle are set to negative. When the absolute value of the change rate of the heading angle is greater than the first threshold and less than or equal to the second threshold, and the change rate of the heading angle is positive, it is determined that the vehicle undergoes the road deviation to the right side. When the absolute value of the change rate of the heading angle is greater than the second threshold, and the change rate of the heading angle is positive, it is determined that the vehicle undergoes the lane change to the right side.

S1030: Control, based on the lane change direction or the road deviation direction, the light display device to display light.

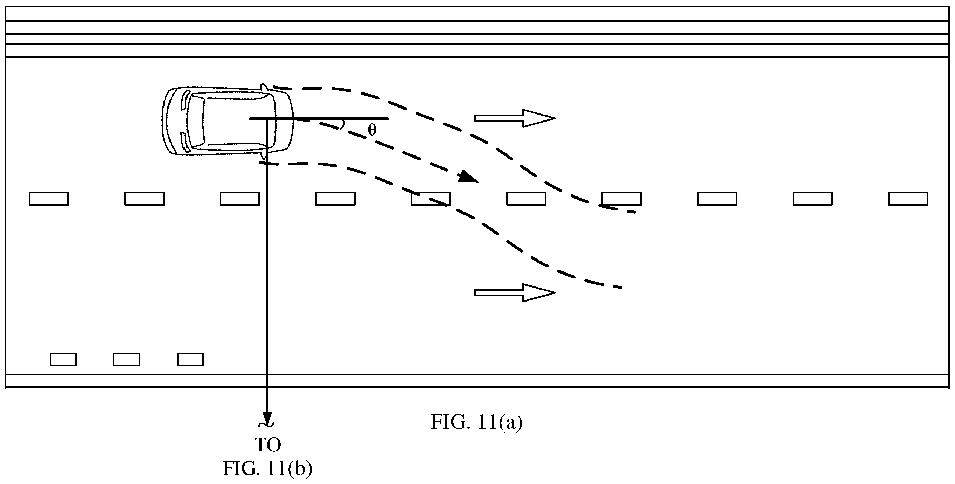

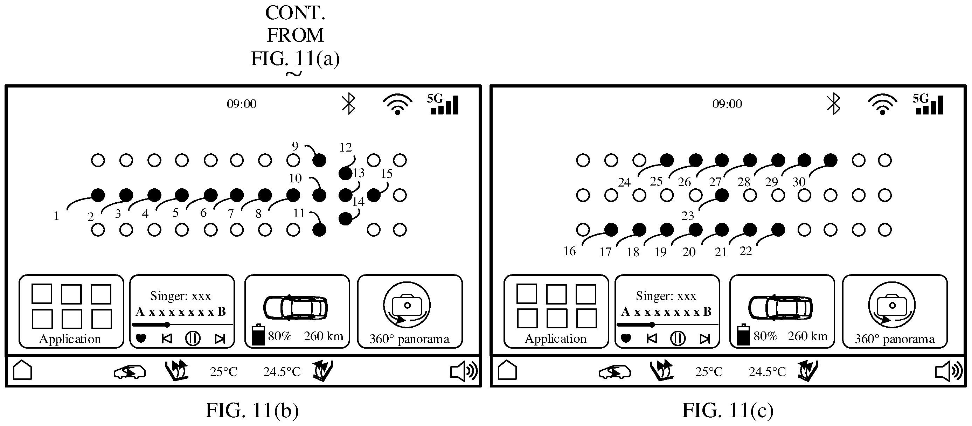

For example, as shown in FIG. 11(a), the vehicle deviates to the right in a running process, and then it is determined, based on a deviation angle θ, whether the vehicle is in a lane change process or in a lane deviation status. The angle θ may be the included angle between the driving angle of the vehicle and the lane line. After it is determined that the vehicle undergoes the road deviation to the right or the lane change to the right, the light display device may be controlled to display red arrow flashing light, as shown in FIG. 11(b), or the light display device may be controlled to display red inverse Z-shaped flashing light, as shown in FIG. 11(c). Further, light flash frequencies are different, to distinguish between light effect of a road deviation and light effect of a lane change. For example, the flash frequency of the light effect of the road deviation may be higher than the flash frequency of the light effect of the lane change.

For example, light effect of a lane change reminder or light effect of a road deviation reminder may be dynamic. As shown in FIG. 11(b), light beads in columns 1 to 11 sequentially light up at a specific time interval. For example, if the time interval is 50 milliseconds, then a light bead 1 lights up at a moment of the $0^{th}$ second, a light bead 2 lights up at a moment of

the 0.05th second, a light bead 3 lights up at a moment of the 0.1st second, and so on; and light beads 9, 10, and 11 simultaneously light up at the 0.4th second, light beads 12, 13, and 14 simultaneously light up at the 0.45th second, and a light bead 15 lights up at the 0.5th second. In this way, the light beads 1 to 15 form dynamic effect of flashing to the left, providing a user with a more intuitive left lane change reminder or a left road deviation reminder. In some possible implementations, each of the light beads 1 to 15 may flash at a fixed frequency, for example, flash at a frequency of twice per second, to maintain dynamic effect of a rightward arrow shown in FIG. 11(b). Alternatively, after each of the light beads 1 to 15 lights up, the light beads 1 to 15 continuously emit light, and after the light bead 15 lights up and continuously emits light for a specific period of time, the light beads 1 to 15 may flash at the fixed frequency. For example, after the light bead 15 lights up, the light beads 1 to 15 continue to continuously emit light for 0.3 second, and then the light beads 1 to 15 simultaneously flash at a frequency of five times per second, so that the user can more intuitively feel light effect and does not miss reminder information.

It should be understood that light effect of the inverse Z-shaped pattern shown in FIG. 11(c) may also be dynamically displayed by using the foregoing descriptions. That is, light beads 16 to 30 may emit light in the lighting manner of the light beads 1 to 15.

It should be noted that the dynamic light effect described above may be further applied to another mode in Table 1. This is not specifically limited in embodiments of this application.

According to the method for controlling the light display device provided in this embodiment of this application, the light display device can be controlled, based on sensed lane change information or road deviation information, to display light, to give a prompt to a driver in time. This helps improve driving safety.

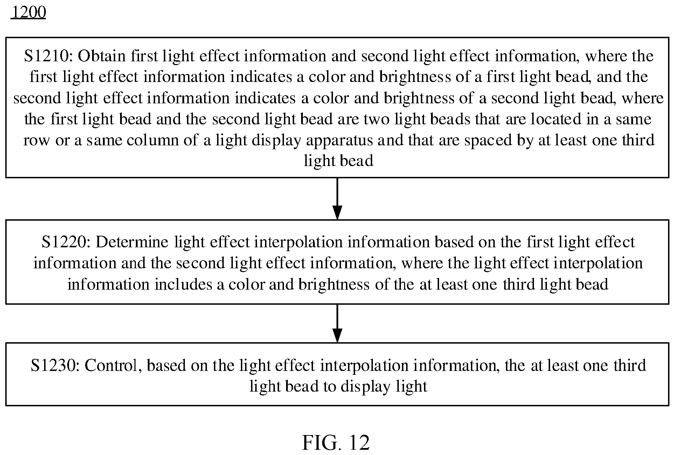

FIG. 12 shows a further method 1200 for controlling a light display device according to an embodiment of this application. The method 1200 may be applied to the vehicle 100 shown in FIG. 1, and the method may be further performed by the system shown in FIG. 3. The method 1200 includes the following steps.

S1210: Obtain first light effect information and second light effect information, where the first light effect information indicates a color and brightness of a first light bead, and the second light effect information indicates a color and brightness of a second light bead, where the first light bead and the second light bead are two light beads that are located in a same row or a same column of the light display device and that are spaced by at least one third light bead.

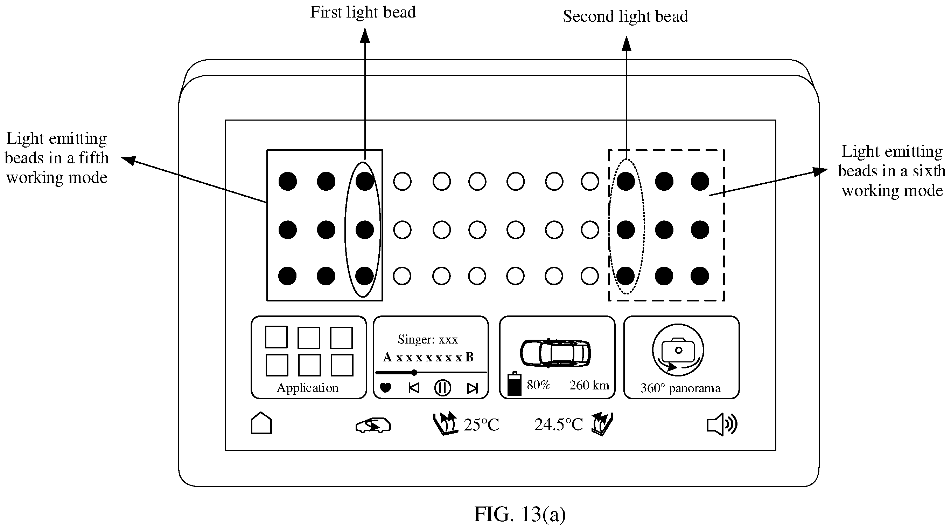

In some possible implementations, the first light bead is a light bead in a fifth working mode, and the second light bead is a light bead in a sixth working mode, as specifically shown in FIG. 13(a). The sixth working mode is a working mode adjacent to the fifth working mode. To be specific, within preset duration in which the light display device is controlled to display light in the fifth working mode, the light display device is controlled to display light in the sixth working mode. For example, the first light bead and the second light bead are two nearest neighbor light beads in two adjacent working modes. For example, if in the fifth working mode, 3 rows * 3 light beads on the left side display blue light, and in the sixth working mode, 3 rows * 3 light beads on the right side flash in red, then the first light bead and the second light bead are respectively a third light bead starting from the left side of a first row and a third light bead starting from the right side of the first row. It should be understood that, in the foregoing case, the first light bead and the second light bead do not emit light at a same moment.

For example, the preset duration may be 0.3 second, may be 0.5 second, or may be other preset duration. This is not specifically limited in embodiments of this application.

In some possible implementations, the first light effect information and the second light effect information may alternatively be set by a user. For example, as shown in FIG. 13(b), the user sets a color of a third light bead starting from the left side of a first row to blue and brightness of the third light bead to 400 micro candela (micro candela, mcd), and sets a color of a fourth light bead starting from the right side of a first row to blue, and brightness of the fourth light bead to 500 mcd. Alternatively, the user sets a color of a third light bead starting from the left side of a first row to blue, and brightness of the third light bead to 400 mcd, and sets a color of a third bead starting from the left side of a third row to blue and brightness of the third bead to 500 mcd. For example, in a music listening pulsation mode or a karaoke mode, the user may set the first light effect information and the second light effect information. Alternatively, in a greeting show mode, the user may set the first light effect information and the second light effect information.

S 1220: Determine light effect interpolation information based on the first light effect information and the second light effect information, where the light effect interpolation information includes a color and brightness of the at least one third light bead.

For example, there is at least one third light bead between the first light bead and the second light bead. Further, a color of each light bead in the at least one third light bead is determined based on the color of the first light bead and the color of the second light bead; and brightness of each light bead in the at least one third light bead is determined based on the brightness of the first light bead and the brightness of the second light bead. For example, the brightness of the third light bead may be determined based on the following formulas:

$$H = H_1 - H_2;$$

and

$$H_{3(i)} = H_1 + iH/L.$$

Hi is the brightness of the first light bead, $H_2$ is the brightness of the second light bead, L is a quantity of third light beads, $H_{3(i)}$ is brightness of an $i^{th}$ third light bead adjacent to the first light bead, and i is a positive integer greater than or equal to 1.

Further, the color of the third light bead may be determined through color interpolation or linear gradient.

In some possible implementations, the light effect interpolation information includes information about time at which the third light bead emits light. For example, an end moment of the fifth working mode is a $k^{th}$ second, and a start moment of the sixth working mode is an $m^{th}$ second. If m - k ≠ 0, a moment at which the third light bead emits light may be determined based on the following formulas:

$$t = m - k;$$

and

$$t_{3(i)} = m + it/L.$$

L is a quantity of third light beads, $t_{3(i)}$ is a light emitting moment of an $i^{th}$ third light bead adjacent to the first light bead, and i is a positive integer greater than or equal to 1. Further, light emitting duration of one or more third light beads may be consistent, and is less than light emitting duration of the first light bead and light emitting duration of the second light bead.

In some possible implementations, the end moment of the fifth working mode and a start moment of the sixth working mode are a same moment, that is, m = k. In this case, the moment at which the third light bead emits light may be set to an $m^{th}$ second.

S1230: Control, based on the light effect interpolation information, the at least one third light bead to display light.

In some possible implementations, a plurality of third light beads simultaneously display light. Alternatively, one or more third light beads, the first light bead, and the second light bead simultaneously display light. Alternatively, one or more third light beads, the first light bead, and the second light bead do not display light at a same moment.

In some possible implementations, the user may perform personalized editing on light effect in the greeting show mode by using the method 1200.

According to the method for controlling the light display device provided in this embodiment of this application, switching between light effect can be more smooth and natural. This improves correlation between complex light effect, and improves visual comfort of the user. In addition, the foregoing method further supports generation of light effect based on a user-defined color and brightness. This helps improve fun and further improves user experience.

In various embodiments of this application, unless otherwise stated or there is a logic conflict, terms and/or descriptions in the various embodiments are consistent and may be mutually referenced, and technical features in different embodiments may be combined based on an internal logical relationship thereof, to form a new embodiment.

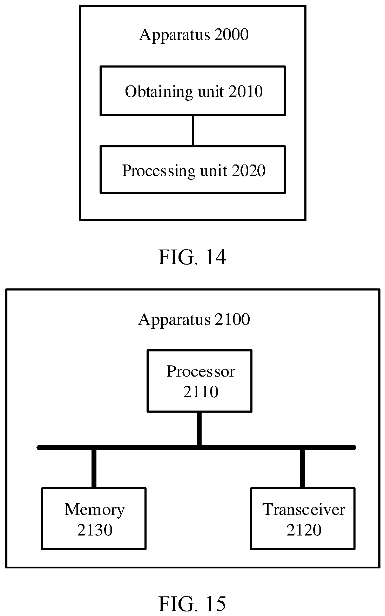

The methods provided in embodiments of this application are described above in detail with reference to FIG. 4 to FIG. 13(a) and FIG. 13(b). Apparatuses provided in embodiments of this application are described below in detail with reference to FIG. 14 and FIG. 15. It should be understood that descriptions of apparatus embodiments correspond to the descriptions of the method embodiments. Therefore, for content that is not described in detail, refer to the method embodiments. For brevity, details are not described herein again.

FIG. 14 is a block diagram of an apparatus 2000 for controlling a light display device according to an embodiment of this application. The apparatus 2000 includes an obtaining unit 2010 and a processing unit 2020. The obtaining unit 2010 may implement a corresponding communication function, and the processing unit 2020 is configured to process data.

Optionally, the apparatus 2000 may further include a storage unit, where the storage unit may be configured to store instructions and/or data. The processing unit 2020 may read the instructions and/or the data in the storage unit, so that the apparatus implements the foregoing method embodiments.

The apparatus 2000 may include units configured to perform the methods in FIG. 4 to FIG. 6, FIG. 8, FIG. 10, and FIG. 12. In addition, the units in the apparatus 2000 and the foregoing other operations and/or functions are respectively used to implement corresponding procedures in the method embodiments in FIG. 4 to FIG. 6, FIG. 8, FIG. 10, and FIG. 12.

When the apparatus 2000 is configured to perform the method 600 in FIG. 6, the obtaining unit 2010 may be configured to perform S601 in the method 600, and the processing unit 2020 may be configured to perform S602 in the method 600.

Specifically, the apparatus 2000 includes: the apparatus includes: the obtaining unit 2010, configured to obtain user location information, where the user location information indicates a location of a user around a vehicle or a location of the user in a cockpit of the vehicle; and the processing unit 2020, configured to control, based on the user location information, a light display device at a first location to display light and/or a first area of the light display device to display light, where the first location is in the cockpit of the vehicle and corresponds to the location of the user in the cockpit of the vehicle, the first area corresponds to the location of the user in the cockpit of the vehicle, and the light display device is disposed in the cockpit of the vehicle.

Optionally, the processing unit 2020 is further configured to: control, based on the user location information, the light display device at the first location to display color gradient light and/or the first area of the light display device to display color gradient light, where the color gradient light has a gradient color toward a direction of the location of the user.

Optionally, the obtaining unit 2010 is further configured to obtain user emotion status information. The processing unit 2020 is further configured to control, based on the user emotion status information and the user location information, a color of the light displayed by the light display device and/or a pattern formed by the light.

Optionally, the processing unit 2020 is further configured to: when the user emotion status information indicates a sad emotion status, control the light display device to display colored light and/or the light display device to display a smiling face pattern; or when the user emotion status information indicates a cheerful or happy emotion status, control the light display device to display white light and/or the light display device to display a "W"-shaped pattern.

Optionally, the obtaining unit 2010 is further configured to obtain first audio information. The processing unit 2020 is further configured to: determine a location of a sound source of the first audio information; and control, based on the first audio information and/or the location of the sound source of the first audio information, the light display device to display light.

Optionally, the first audio information includes a specific wakeup word, and the specific wakeup word is used to wake up an intelligent device in the cockpit of the vehicle, or the first audio information comes from the intelligent device. The processing unit 2020 is further configured to: in response to the first audio information, control a light display device at a second location to display light and/or a second area of the light display device to display light, where the second location is disposed in the cockpit of the vehicle and corresponds to a location of the intelligent device in the cockpit of the vehicle, and the second area corresponds to the location of the intelligent device in the cockpit of the vehicle.

Optionally, the obtaining unit 2010 is further configured to obtain second audio information within preset duration in which the intelligent device is woken up. The processing unit 2020 is further configured to control the light display device to display light based on duration in which the second audio information lasts.

Optionally, the color of the light displayed by the light display device is blue.

Optionally, the first audio information indicates a voice announcement failure, and the processing unit 2020 is further configured to control the light display device to display gray light.

Optionally, the processing unit 2020 is further configured to: when it is detected that a camera ascends, control the light display device to display an upward arrow pattern; or when it is detected that the camera descends, control the light display device to display a downward arrow pattern, where the camera is a pop-up camera disposed in the cockpit of the vehicle.

Optionally, the light display device includes at least one of an ambient light, a breathing light, an in-vehicle display screen, and a HUD.

Optionally, the light display device is disposed at at least one of a dashboard, a central control area display screen, a rear part of a front seat headrest, a front central armrest, and a front passenger seat.

In some possible implementations, the apparatus 2000 is further configured to perform the method 500. When the apparatus 2000 is configured to perform the method 500 in FIG. 5, the obtaining unit 2010 may be configured to perform S501 in the method 500, and the processing unit 2020 may be configured to perform S502 and S503 in the method 500.

Specifically, the apparatus 2000 includes: the obtaining unit 2010, configured to obtain light effect indication information, where the light effect indication information indicates a working mode of the light display device; and the processing unit 2020, configured to: determine a first location of the light display device based on a warning level of the light effect indication information; and control the light display device to display light in the first location, where the light display device is disposed in the cockpit of the vehicle.

Optionally, the obtaining unit 2010 is further configured to: obtain running status information of the vehicle, where the running status information indicates that the vehicle is in a driving status or a parking status. The processing unit 2020 is further configured to: determine a first working mode based on the running status information and the light effect indication information; and control the light display device to display light in the first working mode at the first location.

Optionally, the light effect indication information includes information that indicates the first working mode and information that indicates a second working mode, and the processing unit 2020 is further configured to: when it is determined, based on the running status information, that a priority of the first working mode is higher than a priority of the second working mode, determine the first working mode from the first working mode and the second working mode.

Optionally, the processing unit 2020 is further configured to control a light flash frequency and/or light intensity of the light display device based on the warning level of the light effect indication information.

Optionally, the light effect indication information includes at least one of high fatigue prompt information, moderate fatigue prompt information, mild fatigue prompt information, lane change reminder information, road deviation reminder information, and collision reminder information, where a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information. The processing unit 2020 is further configured to: when the light effect indication information indicates a low warning level, control the flash frequency of the light display device to be P1 and/or the light intensity of the light display device to be L1; when the light effect indication information indicates a medium warning level, control the flash frequency of the light display device to be P2 and/or the light intensity of the light display device to be L2; or when the light effect indication information indicates a high warning level, control the flash frequency of the light display device to be P3 and/or the light intensity of the light display device to be L3, where P1 is less than or equal to P2, P2 is less than or equal to P3, L1 is less than or equal to L2, and L2 is less than or equal to L3.

Optionally, the processing unit 2020 is further configured to: when the vehicle changes to a left lane or deviates to the left of a road, control a plurality of light beads of the light display device to light up sequentially from right to left and/or the light display device to display a left-pointing arrow pattern or a "Z"-shaped pattern; or when the vehicle changes to a right lane or deviates to the right of a road, control a plurality of light beads of the light display device to light up sequentially from left to right and/or the light display device to display a right-pointing arrow pattern or an inverse "Z"-shaped pattern.

Optionally, a color of the light displayed by the light display device is red.

In some possible implementations, the apparatus 2000 is further configured to perform the method 1200. When the apparatus 2000 is configured to perform the method 1200 in FIG. 12, the obtaining unit 2010 may be configured to perform S1210 in the method 1200, and the processing unit 2020 may be configured to perform S 1220 and S 1230 in the method 1200.

Specifically, the apparatus 2000 includes: the obtaining unit 2010, configured to obtain first light effect information and second light effect information, where the first light effect information indicates a color and brightness of a first light bead, and the second light effect information indicates a color and brightness of a second light bead, where the first light bead and the second light bead are two light beads that are located in a same row or a same column of the light display device and that are spaced by at least one third light bead; and the processing unit 2020, configured to: determine light effect interpolation information based on the first light effect information and the second light effect information, where the light effect interpolation information includes a color and brightness of the at least one third light bead; and control, based on the light effect interpolation information, the at least one third light bead to display light.

Optionally, the first light bead is a light bead in a first working mode, the second light bead is a light bead in a second working mode, and the first working mode and the second working mode are adjacent working modes. An interval between a moment at which the first light bead stops emitting light and a moment at which the second light bead starts emitting light is less than or equal to a preset threshold.

Optionally, the first light effect information further includes information about the moment at which the first light bead stops emitting light, and the second light effect information further includes information about a moment at which the first light bead starts emitting light. The processing unit 2020 is further configured to determine a moment at which the at least one third light bead emits light based on the first light effect information and the second light effect information, and the light effect interpolation information includes the moment at which the at least one third light bead emits light.

It should be understood that division of units in the apparatus is merely logical function division. During actual implementation, all or some of the units may be integrated into one physical entity or may be physically separated. In addition, the units in the apparatus may be implemented in a form in which a processor invokes software. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, such as a CPU or a microprocessor, and the memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the units. All the units of the apparatus may be implemented in the form in which the processor invokes software, or may be implemented in the form of hardware circuit. Alternatively, some of the units are implemented in a form in which the processor invokes software, and the remaining units are implemented in the form of hardware circuit.

In this embodiment of this application, the processor is a circuit having a signal processing capability. In an implementation, the processor may be a circuit having an instruction reading and running capability, for example, a CPU, a microprocessor, a GPU, a DSP, or the like. In another implementation, the processor may implement a specific function by using a logical relationship of the hardware circuit. The logical relationship of the hardware circuit is fixed or reconfigurable. For example, the processor is a hardware circuit implemented by an ASIC or a PLD, such as an FPGA. In the reconfigurable hardware circuit, a process in which the processor loads a configuration document to implement a configuration of the hardware circuit may be understood as a process in which the processor loads instructions to implement functions of some or all of the units. In addition, the processor may be further a hardware circuit designed for artificial intelligence, which may be understood as an ASIC, for example, an NPU, a TPU, a DPU, or the like.

It can be learned that the units in the apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units are integrated and implemented in a form of system-on-a-chip (system-on-a-chip, SOC). The SOC may include at least one processor, configured to implement any one of the methods or implement the functions of the units of the apparatus. Types of the at least one processor may be different, for example, including a CPU and an FPGA, a CPU and an artificial intelligence processor, and a CPU and a GPU.

In a specific implementation process, the operations performed by the obtaining unit 2010 and the processing unit 2020 may be performed by a same processor, or may be performed by different processors, for example, separately performed by a plurality of processors. For an example, the one or more processors may be connected to one or more sensors in the sensing system 120 in FIG. 1, to obtain user location information from the one or more sensors and perform processing. For another example, the one or more processors may alternatively be connected to one or more light display devices in the display apparatus 130, to control light effect displayed by the light display device. For example, in a specific implementation process, the one or more processors may be a processor disposed in an in-vehicle infotainment system, or may be a processor disposed in another in-vehicle terminal. For example, in a specific implementation process, the apparatus 2000 may be a chip disposed in an in-vehicle infotainment system or another in-vehicle terminal. For example, in a specific implementation process, the apparatus 2000 may be the computing platform 150 that is shown in FIG. 1 and that is disposed in a vehicle.

An embodiment of this application further provides an apparatus. The apparatus includes a processing unit and a storage unit. The storage unit is configured to store instructions, and the processing unit executes the instructions stored in the storage unit, so that the apparatus performs the methods or the steps performed in the foregoing embodiments.

Optionally, in a specific implementation process, the processing unit includes the processors 151 to 15n shown in FIG. 1. The obtaining unit may be a sensor in the sensing system 120 shown in FIG. 1, or may be the processors 151 to 15n shown in FIG. 1.

FIG. 15 is a block diagram of another apparatus for controlling a light display device according to an embodiment of this application. The apparatus 2100 for controlling the light display device shown in FIG. 15 may include a processor 2110, a transceiver 2120, and a memory 2130. The processor 2110, the transceiver 2120, and the memory 2130 are connected through an internal connection path. The memory 2130 is configured to store instructions, the processor 2110 is configured to execute the instructions stored in the memory 2130, and the transceiver 2120 receives/sends some parameters. Optionally, the memory 2130 may be coupled to the processor 2110 through an interface, or may be integrated with the processor 2110.

It should be noted that the transceiver 2120 may include but is not limited to a transceiver apparatus such as an input/output interface (input/output interface), to implement communication between the apparatus 2100 and another device or a communication network.

The processor 2110 may be a general-purpose CPU, a microprocessor, an ASIC, a GPU, or one or more integrated circuits, and is configured to execute a related program, to implement the method for controlling the light display device in the method embodiments of this application. The processor 2110 may alternatively be an integrated circuit chip and has a signal processing capability. In a specific implementation process, the steps of the method for controlling the light display device in this application may be implemented by using an integrated logic circuit of hardware in the processor 2110 or instructions in a form of software. The processor 2110 may alternatively be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 2130. The processor 2110 reads information in the memory 2130 and performs, in combination with hardware of the processor 2110, the method for controlling the light display device in the method embodiments of this application.

The memory 2130 may be a read only memory (read only memory, ROM), a static storage device, a dynamic storage device, or a random access memory (random access memory, RAM).

The transceiver 2120 uses a transceiver apparatus such as but not limited to a transceiver, to implement communication between the apparatus 2100 and another device or a communication network. For example, user location information may be obtained by using the transceiver 2120.

An embodiment of this application further provides a vehicle, where vehicle may include the apparatus 2000 or the apparatus 2100, and the light display device.

An embodiment of this application further provides a computer program product. The computer program product includes computer program code. When the computer program code is run on a computer, the computer is enabled to perform the foregoing methods.

An embodiment of this application further provides a computer-readable storage medium. The computer-readable medium stores program code. When the computer program code is run on a computer, the computer is enabled to perform any one of the methods in FIG. 4 to FIG. 6, FIG. 8, FIG. 10, and FIG. 12.

An embodiment of this application further provides a chip, including at least one processor and a memory. The at least one processor is coupled to the memory, and is configured to read and execute instructions in the memory, to perform any one of the methods in FIG. 4 to FIG. 6, FIG. 8, FIG. 10, and FIG. 12.

In a specific implementation process, the memory may be configured to store instructions used to control the obtaining unit 2010 and/or the processing unit 2020, and the at least one processor may be configured to perform an operation performed by the obtaining unit 2010 and/or the processing unit 2020. For example, the at least one processor may be connected to one or more sensors in the sensing system 120 in FIG. 1, to obtain user location information from the one or more sensors and perform processing. Alternatively, the at least one processor may be connected to one or more light display devices in the display apparatus 130, to control light effect displayed by the light display device. In a specific implementation process, the apparatus 2000 may be the chip, or the apparatus 2100 may be the chip. In some possible implementations, the chip may be the computing platform 150 that is disposed in a vehicle and that is shown in FIG. 1. For example, the chip may be a chip disposed in an in-vehicle infotainment system or another in-vehicle terminal.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, all or some of the technical solutions of this application may be implemented in a form of software product. The computer software product is stored in a storage medium, and includes several instructions for instructing a computer device (which may be a personal computer, a server, or a network device) to perform all or some of the steps of the methods described in the embodiments. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for controlling a light display device, wherein the light display device is disposed in a cockpit of a vehicle, and the method comprises:

   obtaining user location information, wherein the user location information indicates a location of a user around the vehicle or a location of the user in the cockpit of the vehicle; and
   controlling, based on the user location information, a light display device at a first location to display light and/or a first area of the light display device to display light, wherein
   the first location is in the cockpit of the vehicle and corresponds to the location of the user in the cockpit of the vehicle, and the first area corresponds to the location of the user in the cockpit of the vehicle.

2. The method according to claim 1, wherein the controlling, based on the user location information, a light display device at a first location to display light and/or a second area of the light display device to display light comprises:
   within preset duration after the user enters the vehicle, controlling, based on the user location information, the light display device at the first location to display color gradient light and/or the first area of the light display device to display color gradient light, wherein the color gradient light has a gradient color toward a direction of the location of the user.

3. The method according to claim 1 or 2, wherein the method further comprises:

   obtaining user emotion status information; and

controlling, based on the user emotion status information and the user location information, a color of the light displayed by the light display device and/or a pattern formed by the light.

4. The method according to claim 3, wherein the controlling, based on the user emotion status information and the user location information, a color of the light displayed by the light display device and/or a pattern formed by the light comprises:

when the user emotion status information indicates a sad emotion status, controlling the light display device to display colored light and/or the light display device to display a smiling face pattern; or

when the user emotion status information indicates a cheerful or happy emotion status, controlling the light display device to display white light and/or the light display device to display a "W"-shaped pattern.

5. The method according to any one of claims 1 to 4, wherein the method further comprises:

obtaining first audio information, and determining a location of a sound source of the first audio information; and controlling, based on the first audio information and/or the location of the sound source of the first audio information, the light display device to display light.

6. The method according to claim 5, wherein the first audio information comprises a specific wakeup word, and the specific wakeup word is used to wake up an intelligent device in the cockpit of the vehicle, or the first audio information comes from the intelligent device; and

the controlling, based on the first audio information and/or the location of the sound source of the first audio information, the light display device to display light comprises:

in response to the first audio information, controlling a light display device at a second location to display light and/or a second area of the light display device to display light, wherein the second location is disposed in the cockpit of the vehicle and corresponds to a location of the intelligent device in the cockpit of the vehicle, and the second area corresponds to the location of the intelligent device in the cockpit of the vehicle.

7. The method according to claim 5 or 6, wherein the method further comprises:

obtaining second audio information within preset duration in which the intelligent device is woken up; and controlling the light display device to display light based on duration in which the second audio information lasts.

8. The method according to any one of claims 5 to 7, wherein the color of the light displayed by the light display device is blue.

9. The method according to any one of claims 5 to 8, wherein the first audio information indicates a voice announcement failure, and the method further comprises:

controlling the light display device to display gray light.

10. The method according to any one of claims 1 to 9, wherein the method further comprises:

when it is detected that a camera ascends, controlling the light display device to display an upward arrow pattern; or

when it is detected that the camera descends, controlling the light display device to display a downward arrow pattern, wherein the camera is a pop-up camera disposed in the cockpit of the vehicle.

11. The method according to any one of claims 1 to 10, wherein the light display device comprises at least one of an ambient light, a breathing light, an in-vehicle display screen, and a HUD.

12. The method according to any one of claims 1 to 11, wherein the light display device is disposed at at least one of a dashboard, a central control area display screen, a rear part of a front seat headrest, a front central armrest, and a front passenger seat.

13. A method for controlling a light display device, wherein the light display device is disposed in a cockpit of a vehicle, and the method comprises:

obtaining light effect indication information, wherein the light effect indication information indicates a working mode of the light display device;
determining a first location of the light display device based on a warning level of the light effect indication information; and
controlling the light display device to display light at the first location.

14. The method according to claim 13, wherein the method further comprises:

obtaining running status information of the vehicle, wherein the running status information indicates that the vehicle is in a driving status or a parking status; and
determining a first working mode based on the running status information and the light effect indication information; and
the controlling the light display device to display light at the first location comprises:
controlling the light display device to display light in the first working mode at the first location.

15. The method according to claim 14, wherein the light effect indication information comprises information that indicates the first working mode and information that indicates a second working mode, and the determining a first working mode based on the running status information and the light effect indication information comprises:
when it is determined, based on the running status information, that a priority of the first working mode is higher than a priority of the second working mode, determining the first working mode from the first working mode and the second working mode.

16. The method according to any one of claims 13 to 15, wherein the method further comprises:
controlling a light flash frequency and/or light intensity of the light display device based on the warning level of the light effect indication information.

17. The method according to claim 16, wherein the light effect indication information comprises at least one of high fatigue prompt information, moderate fatigue prompt information, mild fatigue prompt information, lane change reminder information, road deviation reminder information, and collision reminder information, wherein a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information; and
the controlling a light flash frequency and/or light intensity of the light display device based on the warning level of the light effect indication information comprises:

when the light effect indication information indicates a low warning level, controlling the flash frequency of the light display device to be P1 and/or the light intensity of the light display device to be L1;
when the light effect indication information indicates a medium warning level, controlling the flash frequency of the light display device to be P2 and/or the light intensity of the light display device to be L2; or
when the light effect indication information indicates a high warning level, controlling the flash frequency of the light display device to be P3 and/or the light intensity of the light display device to be L3, wherein
P1 is less than or equal to P2, P2 is less than or equal to P3, L1 is less than or equal to L2, and L2 is less than or equal to L3.

18. The method according to any one of claims 13 to 17, wherein the method further comprises:

when the vehicle changes to a left lane or deviates to the left of a road, controlling a plurality of light beads of the light display device to light up sequentially from right to left and/or the light display device to display a left-pointing arrow pattern or a "Z"-shaped pattern; or
when the vehicle changes to a right lane or deviates to the right of a road, controlling a plurality of light beads of the light display device to light up sequentially from left to right and/or the light display device to display a right-pointing arrow pattern or an inverse "Z"-shaped pattern.

19. The method according to any one of claims 13 to 18, wherein a color of the light displayed by the light display device is red.

20. An apparatus for controlling a light display device, wherein the light display device is disposed in a cockpit of a vehicle, and the apparatus comprises:

> an obtaining unit, configured to obtain user location information, wherein the user location information indicates a location of a user around the vehicle or a location of the user in the cockpit of the vehicle; and
> a processing unit, configured to control, based on the user location information, a light display device at a first location to display light and/or a first area of the light display device to display light, wherein
> the first location is in the cockpit of the vehicle and corresponds to the location of the user in the cockpit of the vehicle, and the first area corresponds to the location of the user in the cockpit of the vehicle.

21. The apparatus according to claim 20, wherein the processing unit is further configured to:
within preset duration after the user enters the vehicle, control, based on the user location information, the light display device at the first location to display color gradient light and/or the first area of the light display device to display color gradient light, wherein the color gradient light has a gradient color toward a direction of the location of the user.

22. The apparatus according to claim 20 or 21, wherein the obtaining unit is further configured to:

> obtain user emotion status information; and
> the processing unit is further configured to control, based on the user emotion status information and the user location information, a color of the light displayed by the light display device and/or a pattern formed by the light.

23. The apparatus according to claim 22, wherein the processing unit is further configured to:

> when the user emotion status information indicates a sad emotion status, control the light display device to display colored light and/or the light display device to display a smiling face pattern; or
> when the user emotion status information indicates a cheerful or happy emotion status, control the light display device to display white light and/or the light display device to display a "W"-shaped pattern.

24. The apparatus according to any one of claims 20 to 23, wherein the obtaining unit is further configured to:

> obtain first audio information; and
> the processing unit is further configured to: determine a location of a sound source of the first audio information; and control, based on the first audio information and/or the location of the sound source of the first audio information, the light display device to display light.

25. The apparatus according to claim 24, wherein the first audio information comprises a specific wakeup word, and the specific wakeup word is used to wake up an intelligent device in the cockpit of the vehicle, or the first audio information comes from the intelligent device; and the processing unit is further configured to:
in response to the first audio information, control a light display device at a second location to display light and/or a second area of the light display device to display light, wherein the second location is disposed in the cockpit of the vehicle and corresponds to a location of the intelligent device in the cockpit of the vehicle, and the second area corresponds to the location of the intelligent device in the cockpit of the vehicle.

26. The apparatus according to claim 24 or 25, wherein the obtaining unit is further configured to:

> obtain second audio information within preset duration in which the intelligent device is woken up; and
> the processing unit is further configured to control the light display device to display light based on duration in which the second audio information lasts.

27. The apparatus according to any one of claims 24 to 26, wherein the color of the light displayed by the light display device is blue.

28. The apparatus according to any one of claims 24 to 27, wherein the first audio information indicates a voice announcement failure, and the processing unit is further configured to:
control the light display device to display gray light.

29. The apparatus according to any one of claims 20 to 28, wherein the processing unit is further configured to:

> when it is detected that a camera ascends, control the light display device to display an upward arrow pattern; or

when it is detected that the camera descends, control the light display device to display a downward arrow pattern, wherein the camera is a pop-up camera disposed in the cockpit of the vehicle.

30. The apparatus according to any one of claims 20 to 29, wherein the light display device comprises at least one of an ambient light, a breathing light, an in-vehicle display screen, and a HUD.

31. The apparatus according to any one of claims 20 to 30, wherein the light display device is disposed at at least one of a dashboard, a central control area display screen, a rear part of a front seat headrest, a front central armrest, and a front passenger seat.

32. An apparatus for controlling a light display device, wherein the light display device is disposed in a cockpit of a vehicle, and the apparatus comprises:

an obtaining unit, configured to obtain light effect indication information, wherein the light effect indication information indicates a working mode of the light display device; and
a processing unit, configured to: determine a first location of the light display device based on a warning level of the light effect indication information; and control the light display device to display light at the first location.

33. The apparatus according to claim 32, wherein the obtaining unit is further configured to:

obtain running status information of the vehicle, wherein the running status information indicates that the vehicle is in a driving status or a parking status; and
the processing unit is further configured to: determine a first working mode based on the running status information and the light effect indication information; and control the light display device to display light in the first working mode at the first location.

34. The apparatus according to claim 33, wherein the light effect indication information comprises information that indicates the first working mode and information that indicates a second working mode, and the processing unit is further configured to:
when it is determined, based on the running status information, that a priority of the first working mode is higher than a priority of the second working mode, determine the first working mode from the first working mode and the second working mode.

35. The apparatus according to any one of claims 32 to 34, wherein the processing unit is further configured to:
control a light flash frequency and/or light intensity of the light display device based on the warning level of the light effect indication information.

36. The apparatus according to claim 35, wherein the light effect indication information comprises at least one of high fatigue prompt information, moderate fatigue prompt information, mild fatigue prompt information, lane change reminder information, road deviation reminder information, and collision reminder information, wherein a warning level of the high fatigue prompt information is higher than a warning level of the moderate fatigue prompt information, the warning level of the moderate fatigue prompt information is higher than a warning level of the mild fatigue prompt information, a warning level of the collision reminder information is higher than a warning level of the lane deviation reminder information, and the warning level of the lane deviation reminder information is higher than a warning level of the lane change reminder information; and the processing unit is further configured to:

when the light effect indication information indicates a low warning level, control the flash frequency of the light display device to be P1 and/or the light intensity of the light display device to be L1;
when the light effect indication information indicates a medium warning level, control the flash frequency of the light display device to be P2 and/or the light intensity of the light display device to be L2; or
when the light effect indication information indicates a high warning level, control the flash frequency of the light display device to be P3 and/or the light intensity of the light display device to be L3, wherein
P1 is less than or equal to P2, P2 is less than or equal to P3, L1 is less than or equal to L2, and L2 is less than or equal to L3.

37. The apparatus according to any one of claims 32 to 36, wherein the processing unit is further configured to:

when the vehicle changes to a left lane or deviates to the left of a road, control a plurality of light beads of the light display device to light up sequentially from right to left and/or the light display device to display a left-pointing arrow pattern or a "Z"-shaped pattern; or

when the vehicle changes to a right lane or deviates to the right of a road, control a plurality of light beads of the light display device to light up sequentially from left to right and/or the light display device to display a right-pointing arrow pattern or an inverse "Z"-shaped pattern.

38. The apparatus according to any one of claims 32 to 37, wherein a color of the light displayed by the light display device is red.

39. An apparatus for controlling a light display device, comprising:

a memory, configured to store a computer program; and
a processor, configured to execute the computer program stored in the memory, to enable the apparatus to perform the method according to any one of claims 1 to 19.

40. A vehicle, comprising the apparatus and the light display device according to any one of claims 20 to 38.

41. A computer-readable storage medium, wherein the computer-readable storage medium stores a computer program, and when the computer program is executed by a computer, the method according to any one of claims 1 to 19 is implemented.

42. A chip, wherein the chip comprises a processor and a data interface, and the processor reads, through the data interface, instructions stored in a memory, to perform the method according to any one of claims 1 to 19.

Vehicle 100

Sensing system 120

Display apparatus 130

Computing platform 150

| Processor 151 | Processor 152 | ... | Processor 15n |

FIG. 1

Dashboard

In-vehicle
display screen

d

e

c

b

a

FIG. 2(a)

EP 4 514 071 A1

FIG. 2(b)

39

LED light bead

Virtual
light bead

FIG. 2(c)

FIG. 3

400

S401: Obtain running status information of a vehicle, where the running status information indicates that the vehicle is in a driving status or a parking status

S402: Obtain light effect indication information, where the light effect indication information indicates a working mode of a light display device

S403: Determine a first working mode based on the running status information and the light effect indication information

S404: Control the light display device to display light in the first working mode

FIG. 4

500

S501: Obtain light effect indication information, where the light effect indication information indicates a working mode of a light display device

S502: Determine a first location of the light display device based on a warning level of the light effect indication information

S503: Control the light display device to display light at the first location

FIG. 5

600

S601: Obtain user location information, where the user location information indicates a location of a user around a vehicle or a location of the user in a cockpit of the vehicle

S602: Control, based on the user location information, a light display device at a first location to display light and/or a first area of the light display device to display light, where the first location is disposed in the cockpit of the vehicle and corresponds to the location of the user in the cockpit of the vehicle, and the first area corresponds to the location of the user in the cockpit of the vehicle

FIG. 6

~
TO
FIG. 7(b)

User A

~
TO
FIG. 7(c)

User B

FIG. 7(a)

CONT.
FROM
FIG. 7(a)

Singer: xxx
A x x x x x x x B

Application

80%   260 km

360° panorama

25°C          24.5°C

FIG. 7(b)

CONT.
FROM
FIG. 7(a)

Singer: xxx
A x x x x x x x B

Application

80%   260 km

360° panorama

25°C          24.5°C

FIG. 7(c)

FIG. 7(d)

800

| S801: Obtain audio information, and determine a location of a sound source of the audio information |
|---|

| S802: Control, based on the audio information and/or the location of the sound source of the audio information, a light display device to display light |
|---|

FIG. 8

User C: Turn on the in-vehicle infotainment system

User A

~
TO
FIG. 9(b)

FIG. 9(a)

FIG. 9(b)

CONT.
FROM
FIG. 9(a)

FIG. 9(c)

1000

S1010: Obtain road information and/or vehicle pose information

S1020: Determine a lane change direction or a road deviation direction of a vehicle based on the road information and/or the vehicle pose information

S1030: Control, based on the lane change direction or the road deviation direction, a light display device to display light

FIG. 10

FIG. 11(a)

TO
FIG. 11(b)

FIG. 11(b)

FIG. 11(c)

EP 4 514 071 A1

1200

S1210: Obtain first light effect information and second light effect information, where the first light effect information indicates a color and brightness of a first light bead, and the second light effect information indicates a color and brightness of a second light bead, where the first light bead and the second light bead are two light beads that are located in a same row or a same column of a light display apparatus and that are spaced by at least one third light bead

S1220: Determine light effect interpolation information based on the first light effect information and the second light effect information, where the light effect interpolation information includes a color and brightness of the at least one third light bead

S1230: Control, based on the light effect interpolation information, the at least one third light bead to display light

FIG. 12

FIG. 13(a)

FIG. 13(b)

EP 4 514 071 A1

Apparatus 2000

Obtaining unit 2010

Processing unit 2020

FIG. 14

Apparatus 2100

Processor
2110

Memory
2130

Transceiver
2120

FIG. 15

## INTERNATIONAL SEARCH REPORT

| International application No. |
| --- |
| **PCT/CN2022/137561** |

**A.   CLASSIFICATION OF SUBJECT MATTER**

H05B47/105(2020.01)i;B60Q3/80(2017.01)i;B60Q3/70(2017.01)i

According to International Patent Classification (IPC) or to both national classification and IPC

**B.   FIELDS SEARCHED**

Minimum documentation searched (classification system followed by classification symbols)

IPC:H05B, B60Q, F21S, F21V

Documentation searched other than minimum documentation to the extent that such documents are included in the fields searched

Electronic data base consulted during the international search (name of data base and, where practicable, search terms used)

WPI, EPODOC, CNPAT, CNKI: 座舱, 灯光, 氛围灯, 显示, 控制, 位置, 驾乘, 体验; cab, light, ambient lamp, show, control, position, drive or driving, feeling

**C.   DOCUMENTS CONSIDERED TO BE RELEVANT**

| Category* | Citation of document, with indication, where appropriate, of the relevant passages | Relevant to claim No. |
| --- | --- | --- |
| Y | CN 111800920 A (HUMAN HORIZONS (SHANGHAI) CLOUD COMPUTING TECHNOLOGY CO., LTD.) 20 October 2020 (2020-10-20) description, specific embodiments, and figures 1-16 | 1-12, 20-31, 39-42 |
| Y | CN 110949248 A (ZHEJIANG HOZON NEW ENERGY AUTOMOBILE CO., LTD.) 03 April 2020 (2020-04-03) description, specific embodiments, and figures 1-3 | 1-12, 20-31, 39-42 |
| X | CN 110949248 A (ZHEJIANG HOZON NEW ENERGY AUTOMOBILE CO., LTD.) 03 April 2020 (2020-04-03) description, specific embodiments, and figures 1-3 | 13-19, 32-42 |
| A | CN 104417431 A (KUNDA COMPUTER TECHNOLOGY (KUNSHAN) CO., LTD. et al.) 18 March 2015 (2015-03-18) entire document | 1-42 |
| A | CN 111891037 A (CHINA FAW CO., LTD.) 06 November 2020 (2020-11-06) entire document | 1-42 |

☑ Further documents are listed in the continuation of Box C.      ☑ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **09 February 2023** | **16 February 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/137561** |

**C.** **DOCUMENTS CONSIDERED TO BE RELEVANT**

| Category* | Citation of document, with indication, where appropriate, of the relevant passages | Relevant to claim No. |
| --- | --- | --- |
| A | CN 114001298 A (ZHEJIANG GEELY AUTOMOBILE HOLDINGS LIMITED et al.) 01 February 2022 (2022-02-01)<br>    entire document | 1-42 |
| A | CN 114286479 A (CHONGQING CHANG'AN AUTOMOBILE CO., LTD.) 05 April 2022 (2022-04-05)<br>    entire document | 1-42 |
| A | JP 2007125986 A (MAZDA MOTOR CORPORATION) 24 May 2007 (2007-05-24)<br>    entire document | 1-42 |
| A | US 2009024276 A1 (GM GLOBAL TECHNOLOGY OPERATIONS, INC.) 22 January 2009 (2009-01-22)<br>    entire document | 1-42 |

Form PCT/ISA/210 (second sheet) (July 2022)

**INTERNATIONAL SEARCH REPORT**
Information on patent family members

International application No.

**PCT/CN2022/137561**

| Patent document cited in search report | | | Publication date (day/month/year) | Patent family member(s) | | | Publication date (day/month/year) |
|---|---|---|---|---|---|---|---|
| CN | 111800920 | A | 20 October 2020 | None | | | |
| CN | 110949248 | A | 03 April 2020 | None | | | |
| CN | 104417431 | A | 18 March 2015 | None | | | |
| CN | 111891037 | A | 06 November 2020 | None | | | |
| CN | 114001298 | A | 01 February 2022 | None | | | |
| CN | 114286479 | A | 05 April 2022 | None | | | |
| JP | 2007125986 | A | 24 May 2007 | None | | | |
| US | 2009024276 | A1 | 22 January 2009 | WO | 2009012034 | A1 | 22 January 2009 |
| | | | | US | 7978056 | B2 | 12 July 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210522139